(19) Europäisches Patentamt / European Patent Office / Office européen des brevets

(11) **EP 3 952 400 A1**

(12) **EUROPEAN PATENT APPLICATION**
published in accordance with Art. 153(4) EPC

(43) Date of publication:
**09.02.2022 Bulletin 2022/06**

(21) Application number: **20782248.7**

(22) Date of filing: **30.03.2020**

(51) International Patent Classification (IPC):
**H04W 24/02** (2009.01)

(52) Cooperative Patent Classification (CPC):
**H04W 24/02; H04W 24/10**

(86) International application number:
**PCT/CN2020/082111**

(87) International publication number:
**WO 2020/200171 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2019 CN 201910254174**

(71) Applicant: **Huawei Technologies Co., Ltd.**
**Shenzhen, Guangdong 518129 (CN)**

(72) Inventors:
- **ZHANG, Lili**
  **Shenzhen, Guangdong 518129 (CN)**
- **ZHANG, Hongli**
  **Shenzhen, Guangdong 518129 (CN)**
- **MA, Shuling**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) This application relates to the field of communications technologies, and provides a communication method and a communications apparatus, to measure an interference degree in a cross-link interference scenario. The method includes: A first terminal receives at least one first sounding reference signal SRS from at least one second terminal, obtains, based on the at least one first SRS, information about a measurement result of the at least one second terminal, and sends information about one or more measurement results to a network device. The measurement result indicates signal strength of the first SRS from the second terminal, the first SRS is used to measure cross-link interference CLI, and the first SRS occupies a first resource. The method may be used in the cross-link interference scenario.

FIG. 3

## Description

This application claims priority to Chinese Patent Application No. 201910254174.3, filed with the China National Intellectual Property Administration on March 30, 2019 and entitled "COMMUNICATION METHOD AND COMMUNICATIONS APPARATUS", which is incorporated herein by reference in its entirety.

## TECHNICAL FIELD

This application relates to the field of communications technologies, and in particular, to a communication method and a communications apparatus.

## BACKGROUND

Dynamic (dynamic) time division duplex (time division duplex, TDD) may also be referred to as flexible duplex (flexible duplexing) or duplexing flexibility (duplexing flexibility), and means that uplink and downlink resources can be adaptively allocated based on distribution of uplink and downlink services; and therefore, system resource utilization is effectively improved.

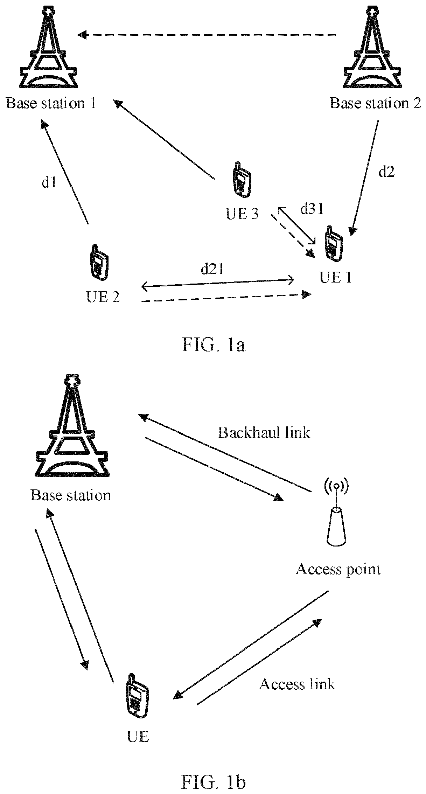

Usually, the dynamic TDD has a problem of cross-link interference (cross-link interference, CLI). The cross-link interference may also be referred to as contradirectional link interference, that is, interference between links in different directions. As shown in FIG. 1a, on the one hand, uplink sending of a second terminal or a third terminal served by a second network device causes CLI to downlink receiving of a first terminal served by a first network device, and such CLI may be referred to as terminal-to-terminal (UE-to-UE) interference; on the other hand, downlink sending of the first network device causes CLI to uplink receiving of the second network device, and such CLI may be referred to as base station-to-base station (gNB-to-gNB) interference.

Referring to FIG. 1b, in an ultra-dense network having a plurality of network devices, wireless backhaul (backhaul) may exist between different network devices. When an access link between a network device and a terminal device coexists with a backhaul link between network devices, the foregoing CLI also occurs.

Different from previous codirectional link interference, the dynamic TDD has the following features: severe interference, great impact, a fast change in directions, no mature mechanism to resolve the problem, and the like. Therefore, a method for enabling a system to learn of a cross-link interference degree urgently needs to be provided.

## SUMMARY

Embodiments of this application provide a communication method and a communications apparatus, to measure a cross-link interference degree.

To achieve the foregoing objective, the following technical solutions are used in the embodiments of this application.

According to a first aspect, an embodiment of this application provides a communication method. The method may be performed by a first terminal or a component (for example, a chip system) in a first terminal. The method includes: The first terminal receives at least one first sounding reference signal (sounding reference signal, SRS) from at least one second terminal, obtains, based on the at least one first SRS, information about a measurement result of the at least one second terminal, and sends information about one or more measurement results to a network device. The measurement result indicates signal strength of the first SRS from the second terminal, the first SRS is used to measure cross-link interference CLI, and the first SRS occupies a first resource.

The communication method provided in this application may be used in a communications system in which CLI exists. For example, the communications system is a flexible duplex system or an integrated access and backhaul (integrated access and backhaul, IAB) system. The method may alternatively be used in a remote interference management (remote interference management, RIM) system. For example, the method may be used in communications systems shown in FIG. 1a and FIG. 1b.

According to the communication method provided in this embodiment of this application, after a second terminal sends a first SRS, if the first terminal can obtain, through monitoring, the first SRS of the second terminal, the first terminal may measure signal strength of the first SRS, and obtain a measurement result of the first SRS. In addition, the first terminal may further report the measurement result to the network device, so that the network device can obtain measurement results of different second terminals. In this way, subsequently, the network device may learn, based on one or more measurement results, of degrees of CLI caused by the different second terminals to the first terminal, and perform some CLI reduction operations.

In addition, when the network device does not obtain a measurement result, the network device may learn, based on second indication information corresponding to the measurement result, of a specific second terminal that causes interference to the first terminal. For example, when the first terminal measures a specific first SRS, and feeds back second indication information of the first SRS to the network device, the network device can determine a transmit end of the first SRS, where the second indication information includes, but is not limited to, at least one of a sequence of the first SRS, a sequence set of the first SRS, or a resource identifier of the first SRS. For example, the first terminal measures a specific first SRS, and feeds back a resource identifier of the first SRS to the network device. Therefore, the network device may know a specific second terminal that sends the first SRS via a resource indicated by the resource identifier, and the network device may determine an interference source that causes CLI to the first terminal.

In a possible design, the information about the one or more measurement results includes indication information of the one or more measurement results and/or second indication information, and the second indication information is indication information, of a second terminal, respectively corresponding to the one or more measurement results.

In a possible design, the method further includes: The first terminal obtains first indication information, where the first indication information indicates the first terminal to send N largest measurement results in the measurement result of the at least one second terminal, or N smallest measurement results in the measurement result of the at least one second terminal, and N is an integer greater than or equal to 1.

Correspondingly, that the first terminal sends the information about the one or more measurement results to the network device includes: The first terminal sends, based on the first indication information, the N measurement results to the network device.

In a possible design, the method further includes: The first terminal obtains first indication information, where the first indication information indicates the first terminal to send second indication information respectively corresponding to N largest measurement results in the measurement result of the at least one second terminal, or second indication information respectively corresponding to N smallest measurement results in the measurement result of the at least one second terminal, and N is an integer greater than or equal to 1.

The second indication information indicates a second terminal corresponding to a measurement result.

Correspondingly, that the first terminal sends the information about the one or more measurement results to the network device includes: The first terminal sends, to the network device based on the first indication information, the second indication information respectively corresponding to the N measurement results.

In a possible design, the method further includes: The first terminal obtains first indication information, where the first indication information indicates the first terminal to send N largest measurement results in the measurement result of the at least one second terminal, and second indication information respectively corresponding to the N largest measurement results, and N is an integer greater than or equal to 1.

Correspondingly, that the first terminal sends the information about the one or more measurement results to the network device includes: The first terminal sends, to the network device based on the first indication information, the N measurement results and the second indication information respectively corresponding to the N measurement results.

In a possible design, the method further includes: The first terminal obtains first indication information, where the first indication information indicates the first terminal to send N smallest measurement results in the measurement result of the at least one second terminal, and second indication information respectively corresponding to the N smallest measurement results, and N is an integer greater than or equal to 1.

Correspondingly, that the first terminal sends the information about the one or more measurement results to the network device includes: The first terminal sends, to the network device based on the first indication information, the N smallest measurement results and the second indication information respectively corresponding to the N measurement results.

In this way, when a measurement result of a specific second terminal is larger, a degree of CLI caused by the second terminal to the first terminal is usually higher. The network device may roughly learn of a CLI status between the first terminal and another terminal based on a measurement result with a highest CLI degree, to perform some CLI reduction operations, thereby reducing CLI between the first terminal and the another terminal. It can be learned that only a part of measurement results are reported, so that signaling overheads for reporting the measurement result are reduced.

In a possible design, the method further includes: The first terminal obtains first indication information, where the first indication information indicates the first terminal to send J measurement results that are in the measurement result of the at least one second terminal and that are greater than or equal to a first threshold, and/or second indication information respectively corresponding to the J measurement results, and J is a positive integer.

Correspondingly, that the first terminal sends the information about the one or more measurement results to the network device includes: The first terminal sends, to the network device based on the first indication information, the J measurement results that are in the measurement result of the at least one second terminal and that are greater than or equal to the first threshold, and/or the second indication information respectively corresponding to the J measurement results.

In this way, only a part of measurement results are reported, so that signaling overheads for reporting the measurement result can be reduced.

In a possible design, the method further includes: The first terminal obtains first indication information, where the first indication information indicates the first terminal to send W measurement results that are in the measurement result of the at least one second terminal and that are less than or equal to a second threshold, and/or second indication information respectively corresponding to the W measurement results, and W is a positive integer.

Correspondingly, that the first terminal sends the information about the one or more measurement results to the network device includes: The first terminal sends, to the network device based on the first indication information, the W measurement results that are in the measurement result of the at least one second terminal and that are less than or equal to the second threshold, and/or the second indication information respectively corresponding to the W measurement results.

In a possible design, that the first terminal sends the information about the one or more measurement results to the network device includes:

The first terminal sends, to the network device at a first time, a first measurement result and/or second indication information corresponding to the first measurement result, and sends, to the network device at a second time, a second measurement result and/or second indication information corresponding to the second measurement result, where an interval between the first time and the second time is a preset time period. A difference between the second measurement result and the first measurement result is greater than or equal to a preset difference.

In other words, only when a measurement result of the second time greatly differs from a measurement result of the first time, the first terminal reports the measurement result that is of the second time and that is specific to a same second terminal. According to the foregoing method, for a second terminal, a first SRS may be measured for a plurality of times, to improve accuracy of a measurement result of the first SRS of the second terminal. Further, measurement results with similar values usually indicate that a position, a signal quality, or the like of the second terminal does not change, or changes slightly. In this case, the obtained measurement result of the first SRS of the second terminal may be redundant information, and the network device may not need the redundant information for decision-making. Therefore, in this embodiment of this application, the first terminal reports only the measurement result that is of the second time and that greatly differs from the measurement result of the first time. In this way, the first terminal can be prevented from reporting a redundant measurement result with a similar value, and signaling overheads are reduced.

In a possible design, the method further includes: The first terminal obtains configuration information, where the configuration information indicates at least one of the following:

  a sequence or a sequence set of the first SRS, and the sequence set includes at least one sequence; and
  reports second indication information of the first SRS, where the second indication information of the first SRS includes one or more of resource indication information of the first SRS or the sequence of the first SRS.

The reporting second indication information of the first SRS includes: reporting the second indication information with a measurement result, in the one or more measurement results, that has a one-to-one correspondence with the second indication information. In other words, when a measurement result is reported, second indication information corresponding to the measurement result is also reported.

In this way, when two measurement results are reported, some other information is also reported, so that when obtaining the measurement results, the network device learns of specific terminals from which interference corresponding to the measurement results comes.

Certainly, the reporting second indication information of the first SRS includes: separately reporting the second indication information and the one or more measurement results. In other words, the measurement result may be independently reported, or the second indication information may be independently reported.

In a possible design, the method further includes: The first terminal sends first capability information to the network device, where the first capability information indicates capability information of CLI measurement, and the first capability information includes at least one of the following: a quantity of first SRSs that can be monitored by the first terminal in a time unit, whether the first terminal can monitor consecutive symbols, a maximum quantity of symbols that can be monitored by the first terminal in a time unit, or a maximum quantity of consecutive symbols that can be monitored by the first terminal in a time unit.

In this way, it can be ensured that the first SRS from the second terminal matches a capability of the first terminal, that is, the first terminal may measure the first SRS without exceeding a capability range of the first terminal. A probability of successfully measuring the first SRS is improved.

In a possible design, the method further includes: The first terminal reports third capability information, where the third capability information indicates a multiplexing relationship between a second resource and the first resource for receiving the first SRS, the multiplexing relationship includes at least one of time division multiplexing or frequency division multiplexing, and the second resource is a resource used for a data transmission.

In this way, when receiving the third capability information, and configuring the first resource and the second resource for the terminal, the network device properly performs resource configuration based on whether the terminal supports the resource multiplexing relationship, to reduce a probability of a conflict between the first resource and the second resource.

According to a second aspect, this application provides a communication method. The method is used by a first terminal or a component in a first terminal. The method includes: The first terminal sends second capability information to a network device. The second capability information indicates a capability of the first terminal for reporting a measurement result. The second capability information indicates a quantity of measurement results that can be reported by the first terminal to the network device, and the measurement result includes a measurement result specific to at least one first SRS.

According to a third aspect, this application provides a communication method. The method is used by a first terminal or a component in a first terminal. The method includes: The first terminal receives a first sounding reference signal SRS from a second terminal, where the first SRS is used to measure cross-link interference CLI, and the first SRS occupies a first resource. The first terminal determines a timing offset based on the first resource, and adjusts, based on the timing offset, a time at which the first SRS is received. In this way, the first terminal receives the first SRS at a time that is obtained after adjustment and at which the first SRS is received.

In a possible design, that the first terminal determines the timing offset based on the first resource includes:

The first terminal obtains geographical position information of the second terminal based on the first resource, where the first resource has a correspondence with the geographical position information; the first terminal obtains a first distance based on geographical position information of the first terminal and the geographical position information of the second terminal, where the first distance is a distance between the first terminal and the second terminal; and the first terminal obtains the timing offset based on the first distance.

In a possible design, the method further includes:

The first terminal receives a first reference signal from a network device, and obtains the geographical position information of the first terminal based on a first reference signal received power (reference signal receiving power, RSRP) corresponding to the first reference signal, where the first RSRP indicates a receive power of the first reference signal arriving at the first terminal; or obtains the geographical position information of the first terminal based on a first reference signal received quality (reference signal receiving quality) corresponding to the first reference signal, where the first RSRQ indicates a signal quality of the first reference signal arriving at the first terminal.

In a possible design, the method further includes:

The first terminal sends fourth capability information to the network device, where the fourth capability information indicates a precision requirement on a measurement result.

In a possible design, the precision requirement is higher than a precision threshold.

According to a fourth aspect, this application provides a communication method. The method is used by a network device or a component (for example, a chip system) in a network device. The method includes: The network device receives information about one or more measurement results from a first terminal, where the information about the one or more measurement results includes the one or more measurement results and/or second indication information respectively corresponding to the one or more measurement results. The measurement result indicates signal strength of a first SRS from a second terminal, and the first SRS occupies a first resource.

In a possible design, the method further includes:

The network device sends first indication information to the first terminal, where the first indication information indicates the first terminal to send N largest measurement results in a measurement result of at least one second terminal, and/or second indication information respectively corresponding to the N largest measurement results; or send N smallest measurement results in a measurement result of at least one second terminal, and/or second indication information respectively corresponding to the N smallest measurement results, and N is an integer greater than or equal to 1.

Correspondingly, that the network device receives the information about the one or more measurement results from the first terminal includes: The network device receives, from the first terminal, the N measurement results and/or the second indication information respectively corresponding to the N results.

In a possible design, the network device sends first indication information to the first terminal, where the first indication information indicates the first terminal to send J measurement results that are in a measurement result of at least one second terminal and that are greater than or equal to a first threshold, and/or second indication information respectively corresponding to the J measurement results, and J is a positive integer.

Correspondingly, that the network device receives the information about the one or more measurement results from the first terminal includes: The network device receives, from the first terminal, the J measurement results that are in the measurement result of the at least one second terminal and that are greater than or equal to the first threshold, and/or the second indication information respectively corresponding to the J measurement results.

In a possible design, the network device sends first indication information to the first terminal, where the first indication information indicates the first terminal to send W measurement results that are in a measurement result of at least one second terminal and that are less than or equal to a second threshold, and/or second indication information respectively corresponding to the W measurement results, and W is a positive integer.

Correspondingly, that the network device receives the information about the one or more measurement results from the first terminal includes: The network device receives, from the first terminal, the W measurement results that are in the measurement result of the at least one second terminal and that are less than or equal to the second threshold, and/or the second indication information respectively corresponding to the W measurement results.

In a possible design, that the network device receives the information about the one or more measurement results from the first terminal includes:

The network device receives, from the first terminal at a first time, a first measurement result and/or second indication information corresponding to the first measurement result; and

the network device receives, from the first terminal at a second time, a second measurement result and/or second indication information corresponding to the second measurement result, where an interval between the first time and the second time is a preset time period, and a difference between the second measurement result and the first measurement result is greater than or equal to a preset difference.

In a possible design, the method further includes: The network device sends configuration information to the first terminal, where the configuration information indicates at least one of the following:

a sequence or a sequence set of the first SRS, and the sequence set includes at least one sequence; and

reports second indication information of the first SRS, where the second indication information of the first SRS includes one or more of resource indication information of the first SRS or the sequence of the first SRS.

In a possible design, the method further includes: The network device receives first capability information to the first terminal, where the first capability information indicates capability information of CLI measurement, and the first capability information includes at least one of the following: a quantity of first SRSs that can be monitored by the first terminal in a time unit, whether the first terminal can monitor consecutive symbols, a maximum quantity of symbols that can be monitored by the first terminal in a time unit, or a maximum quantity of consecutive symbols that can be monitored by the first terminal in a time unit.

In a possible design, the method further includes: The network device receives third capability information from the first terminal, where the third capability information indicates a multiplexing relationship between a second resource and the first resource for receiving the first SRS, the multiplexing relationship includes at least one of time division multiplexing or frequency division multiplexing, and the second resource is a resource used for a data transmission.

According to a fifth aspect, this application provides a communication method. The method is used by a network device or a component in a network device. The method includes: The network device configures a first resource used by a second terminal to send a first SRS, and notifies a first terminal of the first resource.

There is a correspondence between the first resource and geographical position information of the second terminal. A plurality of pieces of geographical position information respectively correspond to a plurality of first resources. When the second terminal is located at different geographical positions, first resources used by the second terminal to send the first SRS are different. In a possible implementation, a preset geographical area may be divided into P (P is a positive integer) sub-areas. Each sub-area corresponds to one piece of geographical position information. The geographical position information may be, for example, an identifier, code, or a number of the sub-area.

In a possible design, the method further includes: The network device sends a first reference signal to the first terminal, receives, from the first terminal, a first reference signal received power RSRP corresponding to the first reference signal, and obtains geographical position information of the first terminal based on the RSRP. The first RSRP indicates a receive power of the first reference signal arriving at the first terminal.

In a possible design, the network device sends a first reference signal to the first terminal, receives, from the first terminal, a first reference signal received quality RSRQ corresponding to the first reference signal, and obtains geographical position information of the first terminal based on the RSRQ. The first RSRQ indicates a signal quality of the first reference signal arriving at the first terminal.

In a possible design, the method further includes: The first terminal sends fourth capability information to the network device, where the fourth capability information indicates a precision requirement on a measurement result.

Optionally, the precision requirement is higher than a precision threshold.

According to a sixth aspect, this application provides a communication method. The method is used by a network device or a component in a network device. The method includes: The network device receives second capability information from a first terminal. The second capability information indicates a capability of the first terminal for reporting a measurement result. The second capability information indicates a quantity of measurement results that can be reported by the first terminal to the network device, and the measurement result includes a measurement result specific to at least one first SRS.

According to a seventh aspect, this application provides a communication method. The method is used by a second terminal or a component in a second terminal. The method includes: The second terminal obtains a first resource for sending a first sounding reference signal SRS, and sends the first SRS to a first terminal on the first resource.

Optionally, the second terminal queries a correspondence between a geographical position and a first resource based on a geographical position of the second terminal, to learn of the first resource for sending the first SRS.

According to an eighth aspect, this application provides a communications apparatus. The apparatus may be the first terminal or the component in the first terminal in any one of the foregoing aspects. The apparatus includes a transceiver and a processor. The transceiver is configured to receive at least one first sounding reference signal SRS from at least one second terminal. The processor is configured to obtain, based on the at least one first SRS, information about a measurement result of the at least one second terminal. The transceiver is further configured to send information about one or more measurement results to a network device. The measurement result indicates signal strength of the first SRS from the second terminal, the first SRS is used to measure cross-link interference CLI, and the first SRS occupies a first resource.

In a possible design, the processor is further configured to obtain first indication information, where the first indication information indicates the first terminal to send N largest measurement results in the measurement result of the at least one second terminal, and/or second indication information respectively corresponding to the N largest measurement results; or send N smallest measurement results in the measurement result of the at least one second terminal, and/or second indication information respectively corresponding to the N smallest measurement results, and N is an integer greater than or equal to 1. Specifically, the first indication information may be preconfigured in the terminal. Alternatively, the first indication information may be received by the transceiver under control of the processor and may be delivered by the network device.

Correspondingly, that the processor is configured to control the transceiver to send the information about the one or more measurement results to the network device includes: The processor is configured to control the transceiver to send, to the network device based on the first indication information, the N measurement results and/or the second indication information respectively corresponding to the N results.

In a possible design, the processor is further configured to obtain first indication information, where the first indication information indicates the first terminal to send J measurement results that are in the measurement result of the at least one second terminal and that are greater than or equal to a first threshold, and/or second indication information respectively corresponding to the J measurement results, and J is a positive integer.

Correspondingly, that the processor is configured to control the transceiver to send the information about the one or more measurement results to the network device includes: The processor is configured to control the transceiver to send, to the network device based on the first indication information, the J measurement results that are in the measurement result of the at least one second terminal and that are greater than or equal to the first threshold, and/or the second indication information respectively corresponding to the J measurement results.

In a possible design, the processor is configured to obtain first indication information, where the first indication information indicates the first terminal to send W measurement results that are in the measurement result of the at least one second terminal and that are less than or equal to a second threshold, and/or second indication information respectively corresponding to the W measurement results, and W is a positive integer.

Correspondingly, that the processor is configured to control the transceiver to send the information about the one or more measurement results to the network device includes: The processor is configured to control the transceiver to send, to the network device based on the first indication information, the W measurement results that are in the measurement result of the at least one second terminal and that are less than or equal to the second threshold, and/or the second indication information respectively corresponding to the W measurement results.

In a possible design, that the processor is configured to control the transceiver to send the information about the one or more measurement results to the network device includes:
The processor is configured to control the transceiver to: send, to the network device at a first time, a first measurement result and/or second indication information corresponding to the first measurement result, and send, to the network device at a second time, a second measurement result and/or second indication information corresponding to the second measurement result, where an interval between the first time and the second time is a preset time period. A difference between the second measurement result and the first measurement result is greater than or equal to a preset difference.

In a possible design, the processor is further configured to: obtain configuration information, where the configuration information indicates at least one of the following:

   a sequence or a sequence set of the first SRS, and the sequence set includes at least one sequence; and
   report second indication information of the first SRS, where the second indication information of the first SRS includes one or more of resource indication information of the first SRS or the sequence of the first SRS.

In a possible design, the transceiver is further configured to send first capability information to the network device, where the first capability information indicates capability information of CLI measurement, and the first capability information includes at least one of the following: a quantity of first SRSs that can be monitored by the first terminal in a time unit, whether the first terminal can monitor consecutive symbols, a maximum quantity of symbols that can be monitored by the first terminal in a time unit, or a maximum quantity of consecutive symbols that can be monitored by the first terminal in a time unit.

In a possible design, the transceiver is further configured to report third capability information, where the third capability information indicates a multiplexing relationship between a second resource and the first resource for receiving the first SRS, the multiplexing relationship includes at least one of time division multiplexing or frequency division multiplexing, and the second resource is a resource used for a data transmission.

According to a ninth aspect, this application provides a communications apparatus. The apparatus may be a first terminal or a component in a first terminal. The apparatus includes a processor and a transceiver. The transceiver is configured to send second capability information to a network device. The second capability information indicates a capability of the first terminal for reporting a measurement result. The second capability information indicates a quantity of measurement results that can be reported by the first terminal to the network device, and the measurement result includes a measurement result specific to at least one first SRS.

According to a tenth aspect, this application provides a communications apparatus. The apparatus may be a first terminal or a component in a first terminal. The apparatus includes a processor and a transceiver. The transceiver is configured to receive a first sounding reference signal SRS from a second terminal, where the first SRS is used to measure cross-link interference CLI, and the first SRS occupies a first resource. The processor is configured to: determine a timing offset based on the first resource, and adjust, based on the timing offset, a time at which the first SRS is received. The transceiver is further configured to receive the first SRS at a time that is obtained after adjustment and at which the first SRS is received.

In a possible design, that the processor is configured to determine the timing offset based on the first resource includes:

The processor is configured to: obtain geographical position information of the second terminal based on the first resource, where the first resource has a correspondence with the geographical position information; obtain a first distance based on geographical position information of the first terminal and the geographical position information of the second terminal, where the first distance is a distance between the first terminal and the second terminal; and obtain the timing offset based on the first distance.

In a possible design, the transceiver is further configured to receive a first reference signal from a network device.

The processor is further configured to obtain the geographical position information of the first terminal based on a first reference signal received power RSRP corresponding to the first reference signal, where the first RSRP indicates a receive power of the first reference signal arriving at the first terminal. Alternatively, the processor is configured to obtain the geographical position information of the first terminal based on a first reference signal received quality RSRQ corresponding to the first reference signal, where the first RSRQ indicates a signal quality of the first reference signal arriving at the first terminal.

In a possible design, the transceiver is further configured to send fourth capability information to the network device, where the fourth capability information indicates a precision requirement on a measurement result.

In a possible design, the precision requirement is higher than a precision threshold.

According to an eleventh aspect, this application provides a communications apparatus. The apparatus may be a network device or a component (for example, a chip system) in a network device. The apparatus includes a processor and a transceiver. The transceiver is configured to receive information about one or more measurement results from a first terminal, where the measurement result indicates signal strength of a first SRS from a second terminal, and the first SRS occupies a first resource.

In a possible design, the transceiver is further configured to send first indication information to the first terminal, where the first indication information indicates the first terminal to: send N largest measurement results in a measurement result of at least one second terminal, and/or second indication information respectively corresponding to the N measurement results; or send N smallest measurement results in a measurement result of at least one second terminal, and/or second indication information respectively corresponding to the N measurement results, and N is an integer greater than or equal to 1.

That the transceiver is configured to receive the information about the one or more measurement results from the first terminal includes: The transceiver is configured to receive, from the first terminal, the N measurement results and/or the second indication information respectively corresponding to the N measurement results.

In a possible design, the transceiver is further configured to send first indication information to the first terminal, where the first indication information indicates the first terminal to send J measurement results that are in a measurement result of at least one second terminal and that are greater than or equal to a first threshold, and/or second indication information respectively corresponding to the J measurement results, and J is a positive integer.

That the transceiver is configured to receive the information about the one or more measurement results from the first terminal includes: The transceiver is configured to receive, from the first terminal, the J measurement results that are in the measurement result of the at least one second terminal and that are greater than or equal to the first threshold, and/or the second indication information respectively corresponding to the J measurement results.

In a possible design, the transceiver is further configured to send first indication information to the first terminal, where the first indication information indicates the first terminal to send W measurement results that are in a measurement result of at least one second terminal and that are less than or equal to a second threshold, and/or second indication information respectively corresponding to the W measurement results, and W is a positive integer.

That the transceiver is configured to receive the information about the one or more measurement results from the first terminal includes: The transceiver is configured to receive, from the first terminal, the W measurement results that are in the measurement result of the at least one second terminal and that are less than or equal to the second threshold, and/or the second indication information respectively corresponding to the W measurement results.

In a possible design, that the transceiver is configured to receive the information about the one or more measurement results from the first terminal includes: The transceiver is configured to: receive, from the first terminal at a first time, a first measurement result and/or second indication information corresponding to the first measurement result, and receive, from the first terminal at a second time, a second measurement result and/or second indication information corresponding to the second measurement result, where an interval between the first time and the second time is a preset time period. A difference between the second measurement result and the first measurement result is greater than or equal to a preset difference.

In a possible design, the transceiver is further configured to: send configuration information to the first terminal, where the configuration information indicates at least one of the following:

a sequence or a sequence set of the first SRS, and the sequence set includes at least one sequence; and
report second indication information of the first SRS, where the second indication information of the first SRS includes one or more of resource indication information of the first SRS or the sequence of the first SRS.

In a possible design, the transceiver is further configured to receive first capability information from the first terminal, where the first capability information indicates capability information of CLI measurement, and the first capability information includes at least one of the following: a quantity of first SRSs that can be monitored by the first terminal in a time unit, whether the first terminal can monitor consecutive symbols, a maximum quantity of symbols that can be monitored by the first terminal in a time unit, or a maximum quantity of consecutive symbols that can be monitored by the first terminal in a time unit.

In a possible design, the transceiver is further configured to receive third capability information from the first terminal, where the third capability information indicates a multiplexing relationship between a second resource and the first resource for receiving the first SRS, the multiplexing relationship includes at least one of time division multiplexing or frequency division multiplexing, and the second resource is a resource used for a data transmission.

According to a twelfth aspect, this application provides a communications apparatus. The apparatus may be a network device or a component in a network device. The apparatus includes a processor and a transceiver. The processor is configured to configure a first resource used by a second terminal to send a first SRS. The transceiver is configured to notify a first terminal of the first resource.

In a possible design, the transceiver is further configured to: send a first reference signal to the first terminal, and receive, from the first terminal, a first reference signal received power RSRP corresponding to the first reference signal. The processor is further configured to obtain geographical position information of the first terminal based on the RSRP. The first RSRP indicates a receive power of the first reference signal arriving at the first terminal.

In a possible design, the transceiver is further configured to: send a first reference signal to the first terminal, and receive, from the first terminal, a first reference signal received quality RSRQ corresponding to the first reference signal. The processor is further configured to obtain geographical position information of the first terminal based on the RSRQ. The first RSRQ indicates a signal quality of the first reference signal arriving at the first terminal.

In a possible design, the transceiver is further configured to send fourth capability information to the network device, where the fourth capability information indicates a precision requirement on a measurement result.

Optionally, the precision requirement is higher than a precision threshold.

According to a thirteenth aspect, this application provides a communications apparatus. The apparatus may be a network device or a component in a network device. The apparatus includes a processor and a transceiver. The transceiver is configured to receive second capability information from a first terminal. The second capability information indicates a capability of the first terminal for reporting a measurement result. The second capability information indicates a quantity of measurement results that can be reported by the first terminal to the network device, and the measurement result includes a measurement result specific to at least one first SRS.

According to a fourteenth aspect, this application provides a communications apparatus. The apparatus may be a second terminal or a component in a second terminal. The apparatus includes a processor and a transceiver. The processor is configured to obtain a first resource for sending a first sounding reference signal SRS. The transceiver is configured to send the first SRS to a first terminal on the first resource.

Optionally, the processor is configured to query a correspondence between a geographical position and a first resource based on a geographical position of the second terminal, to learn of the first resource for sending the first SRS.

In a possible design of any one of the foregoing aspects, the information about the one or more measurement results includes indication information of the one or more measurement results and/or second indication information, and the second indication information is indication information, of a second terminal, respectively corresponding to the one or more measurement results.

The second indication information includes one or more of resource indication information of the first SRS or a sequence of the first SRS. The second indication information corresponding to the one or more measurement results indicates a first SRS corresponding to the measurement result.

In a possible design of any one of the foregoing aspects, the first terminal reports K measurement results of a second terminal in a first cell, and reports I measurement results of a second terminal in a second cell. I and K may be the same or may be different. In other words, for second terminals in different cells, the first terminal may set different upper limits of quantities of measurement results for different cells.

In a possible design of any one of the foregoing aspects, a measurement result reported by the first terminal is H largest measurement results that are in a measurement result of at least one second terminal and that are greater than or equal to a result threshold, and H is a positive integer.

In a possible design of any one of the foregoing aspects, when a measurement result is reported, second indication information of a first SRS used for measurement is also reported. The second indication information of the first SRS includes one or more of resource indication information of the first SRS or a sequence of the first SRS. In the embodiments of this application, the resource indication information of the first SRS includes one or more of a resource identifier of the first SRS, a resource index of the first SRS, a resource identifier of a first SRS set, or a resource index of a first SRS set. That is, sending information about one or more measurement results to the network device includes: reporting second indication information of a first SRS used for measurement while sending a measurement result. The first SRS set includes one or more first SRSs, and the resource identifier of the first SRS set may be identifiers of all resources for transmitting a plurality of first SRSs.

In other words, configuration information may indicate the first terminal to report some other information while reporting the measurement result. In this way, information such as a resource or a sequence related to the first terminal may be carried by one message.

In a possible design of any one of the foregoing aspects, first SRSs of different second terminals have different root sequences.

In a possible design of any one of the foregoing aspects, first SRSs of different second terminals have a same root sequence, and a difference between cyclic shifts of the first SRSs of the different second terminals is a first offset value.

In a possible design of any one of the foregoing aspects, the resource occupied by the first SRS is different from a resource used for a downlink transmission, and the resource occupied by the first SRS is different from a resource used for an uplink transmission. The downlink transmission includes a PDCCH, a PDSCH, a synchronization signal (synchronization signal, SS), or a physical broadcast channel (physical broadcast channel, PBCH). The uplink transmission includes at least one of a PUCCH, a PUSCH, a PRACH, or a second SRS. The second SRS is not an SRS used to measure CLI. Certainly, the uplink transmission or the downlink transmission may alternatively be an uplink transmission or a downlink transmission of another form.

In other words, when configuring the uplink transmission or the downlink transmission, the network device considers whether the uplink transmission or the downlink transmission overlaps the first SRS. If overlapping occurs, the network device configures a resource as a resource used for the uplink transmission or the downlink transmission, or configures the resource as a resource used to receive the first SRS, to avoid a conflict between the uplink or downlink transmission and the first SRS on a same resource.

Alternatively, behavior of the terminal is defined as follows: When the resource occupied by the first SRS and the resource used for the downlink transmission have a part of same resources, or the resource occupied by the first SRS and the resource used for the uplink transmission have a part of same resources, on the same resource, the first SRS is detected by the terminal and the downlink transmission is discarded by the terminal, or the downlink transmission is detected by the terminal and the first SRS is discarded by the terminal, or the first SRS is detected by the terminal and the uplink transmission is discarded by the terminal, or the uplink transmission is detected by the terminal and the first SRS is discarded by the terminal.

According to a fifteenth aspect, this application provides a communications apparatus. The apparatus is configured to implement a function of the first terminal in any one of the foregoing aspects, or is configured to implement a function of the second terminal in any one of the foregoing aspects, or is configured to implement a function of the network device in any one of the foregoing aspects.

According to a sixteenth aspect, this application provides a communications apparatus. The apparatus has a function of implementing the communication method in any design of the foregoing aspects. The function may be implemented by hardware, or may be implemented by hardware executing corresponding software. The hardware or the software includes one or more modules corresponding to the function.

According to a seventeenth aspect, a communications apparatus is provided. The apparatus includes a processor and a memory. The memory is configured to store a computer-executable instruction; and when the communications apparatus runs, the processor executes the computer-executable instruction stored in the memory, so that the communications apparatus performs the communication method in any design of the foregoing aspects.

According to an eighteenth aspect, a communications apparatus is provided. The apparatus includes a processor. The processor is configured to: after coupling to a memory and reading an instruction in the memory, perform, based on the instruction, the communication method in any design of the foregoing aspects.

According to a nineteenth aspect, an embodiment of this application provides a communications apparatus. The apparatus may be a chip system. The chip system includes a processor, and may further include a memory, which are configured to implement a function of the method in any one of the foregoing aspects. The chip system may include a chip, or may include a chip and another discrete component.

According to a twentieth aspect, a communications apparatus is provided. The apparatus may be a circuit system, the circuit system includes a processing circuit, and the processing circuit is configured to perform the communication method in any design of the foregoing aspects.

According to a twenty-first aspect, an embodiment of this application further provides a computer-readable storage medium. The computer-readable storage medium includes an instruction; and when the instruction is run on a computer, the computer is enabled to perform the method in any one of the foregoing aspects.

According to a twenty-second aspect, an embodiment of this application further provides a computer program product. The computer program product includes an instruction; and when the computer program product runs on a computer, the computer is enabled to perform the method in any one of the foregoing aspects.

According to a twenty-third aspect, an embodiment of this application provides a system. The system includes the first terminal, the second terminal, and the network device in any one of the foregoing aspects.

## BRIEF DESCRIPTION OF DRAWINGS

FIG. 1a is a schematic architectural diagram of a communications system according to an embodiment of this application;

FIG. 1b is a schematic architectural diagram of a communications system according to an embodiment of this application;

FIG. 2 is a schematic structural diagram of a communications apparatus according to an embodiment of this application;

FIG. 3 is a schematic flowchart of a communication method according to an embodiment of this application;

FIG. 4 is a schematic diagram of a scenario according to an embodiment of this application;

FIG. 5 is a schematic flowchart of a communication method according to an embodiment of this application;

FIG. 6 is a schematic flowchart of a communication method according to an embodiment of this application;

FIG. 7 is a schematic flowchart of a communication method according to an embodiment of this application;

FIG. 8 is a schematic flowchart of a communication method according to an embodiment of this application;

FIG. 9 is a schematic flowchart of a communication method according to an embodiment of this application;

FIG. 10 is a schematic flowchart of a communication method according to an embodiment of this application;

FIG. 11 is a schematic flowchart of a communication method according to an embodiment of this application; and

FIG. 12 is a schematic structural diagram of a communications apparatus according to an embodiment of this application.

## DETAILED DESCRIPTION OF EMBODIMENTS

In the specification and the accompanying drawings of this application, the terms "first", "second", and the like are intended to distinguish between different objects or distinguish between different processing of a same object, but do not indicate a particular sequence of the objects. In addition, the terms "including" and "having", and any other variants thereof mentioned in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in embodiments of this application, the term such as "example" or "for example" is used to represent an example, an illustration, or a description. Any embodiment or design scheme described as an "example" or "for example" in the embodiments of this application should not be explained as being more preferred or having more advantages than another embodiment or design scheme. Exactly, use of the term such as "example" or "for example" is intended to present a relative concept in a specific manner.

In addition, in the embodiments of this application, "at least one" usually means one or more. "A plurality of" usually means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects.

A communication method provided in the embodiments of this application may be used in a communications system in which CLI exists. For example, the communications system is a flexible duplex system or an integrated access and backhaul (integrated access and backhaul, IAB) system. The method may alternatively be used in a remote interference management (remote interference management, RIM) system. FIG. 1a is an example architecture of a communications system to which an embodiment of this application is applicable. The communications system includes a network device and a terminal device. FIG. 1a shows an example of three terminal devices (namely, UE 1 to UE 3) and two network devices (namely, a base station 1 and a base station 2). The terminal device may be connected to the network device through an air interface, to receive a network service. The network device is mainly configured to implement a radio physical layer function, resource scheduling and radio resource management, radio access control, a mobility management function, or another function. In this application, any one of a first terminal, a second terminal, or a third terminal may be replaced with a network device, namely, a first network device, a second network device, or a third network device. The first terminal, the second terminal, or the third terminal in this application is a terminal device.

In this application, "obtaining" includes: preconfigured in a terminal/network device, or configured by a network device for a terminal. In this application, "configuring" or "configured" may be "configured by a network device for a terminal by using signaling". The signaling may be at least one of RRC signaling, MAC signaling, or physical layer signaling.

The network device may be a device that has a wireless transceiver function, or may be a chip system that is disposed in the device, or may be of another form. The network device includes but is not limited to: an access point (access point, AP) in a Wi-Fi system, for example, a home wireless router, a wireless relay node, a wireless backhaul node, a transmission point (transmission and reception point, TRP or transmission point, TP), an eNB, a macro base station, a micro base station, a high-frequency base station, a new radio eNB (new radio eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or may be a gNB or a transmission point (TRP or TP) in a 5G system such as NR, or one antenna panel or a group of antenna panels (including a plurality of antenna panels) of a base station in a 5G system; or may be a network node, such as a baseband unit (BBU) or a distributed unit (distributed unit, DU) that constitutes a gNB or a transmission point.

In some deployments, the gNB may include a central unit (centralized unit, CU) and a distributed unit (distributed unit, DU). The gNB may further include a radio frequency unit (radio unit, RU). The CU implements a part of functions of the gNB, and the DU implements a part of functions of the gNB. For example, the CU implements functions of a radio resource control (radio resource control, RRC) layer, a packet data convergence protocol (packet data convergence protocol, PDCP) layer, and a service discovery application profile (service discovery application profile, SDAP) layer; and the DU implements functions of a radio link control (radio link control, RLC) layer, a media access control (media access control, MAC) layer, and a physical (physical, PHY) layer. Information at the RRC layer is eventually converted into information at the PHY layer, or is converted from information at the PHY layer. Therefore, in this architecture, higher layer signaling, for example, RRC layer signaling or PHCP layer signaling, may also be considered as being from the DU, or from the DU and the RU. It may be understood that the network device may be a CU node, a DU node, or a device including a CU node and a DU node. In addition, the CU may be classified as a network device in an access network (radio access network, RAN), or may be classified as a network device in a core network (core network, CN). This is not limited herein.

The terminal device may be user equipment that has a wireless transceiver function, or may be a chip system that is disposed in the user equipment. For example, the terminal device may also be referred to as a station (station, STA), user equipment (user equipment, UE), an access terminal, a subscriber unit, a subscriber station, a mobile station, a mobile console, a remote station, a remote terminal, a mobile device, a user terminal, a wireless communications device, a user agent, or a user apparatus. The terminal device includes but is not limited to: a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in transportation safety (transportation safety), a wireless terminal in a smart city (smart city), or a sensor device such as a monitoring terminal.

It should be understood that FIG. 1a is only a simplified schematic diagram of an example for ease of understanding, and only shows a terminal device and a network device (for example, a base station). In this embodiment of this application, the wireless communications system may further include another network device (for example, a core network device) or may further include another terminal device, which is not shown in FIG. 1a.

The communications system may be used in LTE, a 5G network that is currently formulated, another similar network, or another future network. This is not specifically limited in the embodiments of this application. In different networks, the network device or the terminal device in the communications system may correspond to different names. A person skilled in the art may understand that the names do not constitute a limitation on the device.

In addition, a system architecture and a service scenario described in this application are intended to more clearly describe the technical solutions of this application, but are not intended to limit the technical solutions provided in this application. A person of ordinary skill in the art may know that as the system architecture evolves and a new service scenario emerges, the technical solutions provided in this application are also applicable to a similar technical problem.

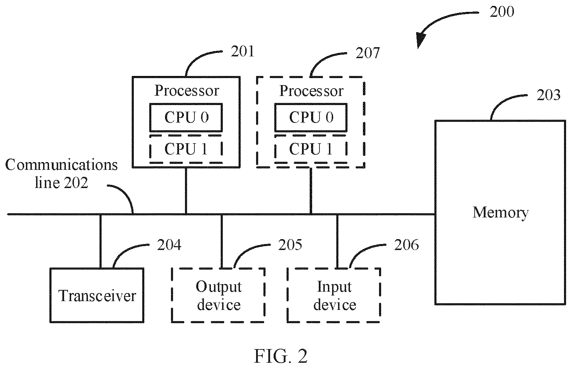

Optionally, the terminal or the network device in this embodiment of this application may be implemented by different devices. For example, the terminal or the network device in this embodiment of this application may be implemented by a communications device in FIG. 2. FIG. 2 is a schematic structural diagram of hardware of the communications device according to an embodiment of this application. The communications device 200 includes at least one processor 201, a communications line 202, a memory 203, and at least one transceiver 204. The memory 203 may alternatively be included in the processor 201.

The processor 201 may be a general-purpose central processing unit (central processing unit, CPU), a microprocessor, an application-specific integrated circuit (application-specific integrated circuit, ASIC), or one or more integrated circuits for controlling program execution of the solutions of this application.

The communications line 202 may include a path for transmitting information between the foregoing components.

The transceiver 204 is configured to communicate with another device. In the embodiments of this application, the transceiver may be a module, a circuit, a bus, an interface, or another apparatus that can implement a communication function, and is configured to communicate with the another device. Optionally, the transceiver may be a transmitter that is independently disposed, and the transmitter may be configured to send information to the another device; or the transceiver may be a receiver that is independently disposed, and is configured to receive information from the another device. Alternatively, the transceiver may be a component integrating functions of sending and receiving information. A specific implementation of the transceiver is not limited in the embodiments of this application.

The memory 203 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor through the communications line 202. The memory may alternatively be integrated with the processor.

The memory 203 is configured to store a computer-executable instruction for implementing the solutions of this application, and the processor 201 controls the execution. The processor 201 is configured to execute the computer-executable instruction stored in the memory 203, to implement methods provided in the following embodiments of this application.

Optionally, the computer-executable instruction in the embodiments of this application may also be referred to as application program code, an instruction, a computer program, or another name. This is not specifically limited in the embodiments of this application.

During specific implementation, in an embodiment, the processor 201 may include one or more CPUs, for example, a CPU 0 and a CPU 1 in FIG. 2.

During specific implementation, in an embodiment, the communications device 200 may include a plurality of processors, for example, the processor 201 and a processor 207 in FIG. 2. Each of the processors may be a single-core (single-CPU) processor or a multi-core (multi-CPU) processor. The processor herein may refer to one or more devices, circuits, and/or processing cores configured to process data (for example, a computer program instruction).

During specific implementation, in an embodiment, the communications device 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive input of a user in a plurality of manners. For example, the input device 206 may be a mouse, a keyboard, a touchscreen device, or a sensing device.

FIG. 2 is an example structural diagram of the communications device. It should be understood that the communications device shown in the figure is merely an example, and during actual application, the communications device may have more or fewer components than those shown in FIG. 2, or two or more components may be combined, or the communications device may have different component configurations.

The communications device 200 may be a general-purpose device or a dedicated device. A type of the communications device 200 is not limited in the embodiments of this application. The terminal or the access network device may be a device having a structure similar to that in FIG. 2.

The following describes the communication method provided in the embodiments of this application with reference to communications systems shown in FIG. 1a and FIG. 1b. The following mainly uses an example in which the network device is a base station for description. A unified statement is provided herein, and details are not described below.

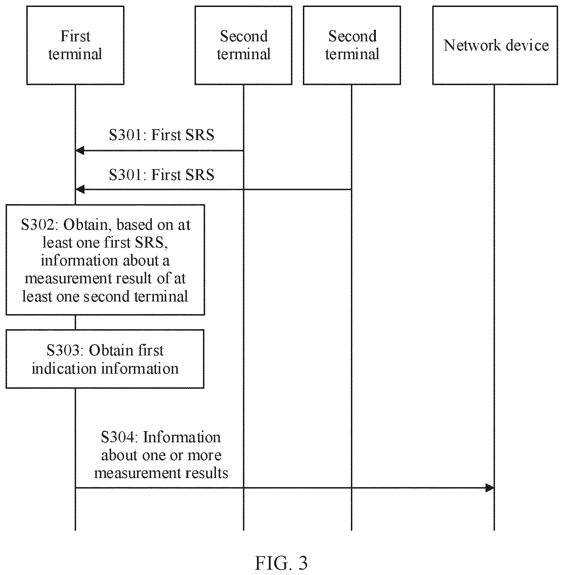

Referring to FIG. 3, a communication method provided in an embodiment of this application includes the following steps.

S301: A second terminal sends a first SRS to a first terminal.

Correspondingly, the first terminal receives at least one SRS from at least one second terminal. The first SRS is used to measure CLI, and the first SRS occupies a first resource.

In this embodiment of this application, the first terminal is usually a terminal that may be interfered with. In this specification, the first terminal may also be referred to as an interfered (interfered) terminal. The second terminal is a terminal that may cause CLI to the first terminal. In this specification, the second terminal may also be referred to as an interfering (interfering) terminal. In different communications scenarios, roles of the first terminal and the second terminal may be interchanged. For example, in FIG. 1a, the UE 2 and the UE 3 perform uplink sending. In this case, the UE 2 and the UE 3 may cause CLI to the UE 1. Correspondingly, the UE 1 may be referred to as a first terminal, and the UE 2 and the UE 3 may be referred to as second terminals. In another communications scenario, for example, if the UE 1 performs uplink sending, the UE 1 may be referred to as a second terminal, and correspondingly, the UE 2 and the UE 3 that may be interfered with by the uplink sending of the UE 1 may be referred to as first terminals. Typically, the UE 1 and the UE 2 may be UEs respectively belonging to adjacent cells. However, in some special cases, for example, in a full-duplex scenario, the UE 1 and the UE 2 may be UEs belonging to a same cell.

In this embodiment of this application, the first SRS is an SRS used to measure CLI. A specific interfering terminal sends a first SRS on a first resource. An interfered terminal monitors the first SRS; and after receiving the first SRS, measures signal strength of the first SRS, to obtain a measurement result of the first SRS. Optionally, the measurement result may be a layer 3 (layer 3, L3) measurement result, to be specific, the measured signal strength of the first SRS is filtered, to obtain the L3 measurement result. Filtering may be layer 3 filtering, and a parameter used for the layer 3 filtering may be configured. Optionally, the measurement result obtained after the signal strength of the first SRS is measured may be a layer 1 (layer 1, L1) measurement result.

It is easy to understand that different second terminals may send first SRSs, and the first terminal may monitor a first SRS from one or more second terminals, and determine signal strength of the corresponding first SRS. FIG. 3 uses an example in which two second terminals send first SRSs to the first terminal.

S302: The first terminal obtains, based on the at least one first SRS, information about a measurement result of the at least one second terminal.

The measurement result indicates signal strength of the first SRS from the second terminal.

It is easy to understand that after obtaining the first SRS from the one or more second terminals through monitoring, the first terminal may measure signal strength of each first SRS, to obtain measurement result of each second terminal. A measurement result of a specific second terminal indicates signal strength of a first SRS from the second terminal, and may further indicate a degree of CLI caused by the second terminal to the first terminal. In addition, higher signal strength of the first SRS from the second terminal, that is, a larger value of the measurement result, indicates a higher degree of the CLI caused by the second terminal to the first terminal. Optionally, that the first terminal measures the signal strength of the first SRS may be that the first terminal measures an RSRP of the first SRS and uses the RSRP of the first SRS as the measurement result of the first SRS. Alternatively, the first terminal measures an RSSI of the first SRS and uses the RSSI of the first SRS as the measurement result of the first SRS. Alternatively, the first terminal may use both an RSRP and an RSSI of the first SRS as the measurement result of the first SRS. Alternatively, the first terminal may use another indicator as the measurement result of the first SRS. Indicators are not listed one by one herein. An indicator that is specifically used by the first terminal as the measurement result may be indicated by a network device by using configuration information. Alternatively, the first terminal determines, according to a preconfigured rule in the first terminal, a specific indicator that is used as the measurement result. For details of a specific indicator that is used by the first terminal as the measurement result, refer to the following descriptions.

Optionally, the measurement result may be obtained by the first terminal by performing derivation, filtering, or calculation on a measurement sample of the first SRS in a first time period. Specifically, the measurement result may be an average value of measurement samples of the first SRS in the first time period, for example, is an average value of values obtained by weighting the measurement samples of the first SRS in the first time period based on different parameters. The first time period that is set for measuring the first SRS may be configured.

Optionally, the measurement result may alternatively be obtained by the first terminal by performing derivation, filtering, or calculation on a measurement sample of the first SRS in a second time period. Specifically, the measurement result may be a proportion of a quantity of measurement samples that are in measurement samples of the first SRS in the second time period and that are greater than a fourth threshold to a quantity of the measurement samples of the first SRS in the second time period. For example, if the quantity of the measurement samples of the first SRS in the second time period is 100, and 60 measurement samples in the 100 measurement samples are greater than the fourth threshold, the measurement result is represented as 60%. The second time period that is set for measuring the first SRS may be configured. The first time period and the second time period may be the same or different. The fourth threshold may be configured.

Information about one or more measurement results includes indication information of the one or more measurement results and/or second indication information.

The indication information of the measurement result is information indicating the measurement result, and the terminal device may directly report the measurement result, an index of the measurement result, an identifier of the measurement result, or other information indicating the measurement result. In this embodiment of this application, that the measurement result is reported is mainly used as an example for description. It may be understood that provided that the terminal can finally notify the network device of related information of the measurement result, to enable the network device to learn of the measurement result, the solution should fall within the protection scope of the solutions in the embodiments of this application.

The second indication information is indication information, of a second terminal, respectively corresponding to the one or more measurement results. In other words, the second indication information may be used to distinguish between different second terminals. Optionally, the second indication information includes one or more of resource indication information of the first SRS, a sequence of the first SRS, or a sequence set of the first SRS. Certainly, the second indication information may alternatively be other information that can be used to distinguish between different second terminals. For detailed descriptions of the second indication information, refer to the following descriptions.

S303: The first terminal obtains first indication information.

The first indication information indicates the first terminal to report information about a measurement result. Optionally, the first indication information indicates at least one of a quantity of measurement results reported by the first terminal or a feature of a reported measurement result.

Optionally, the first indication information is preconfigured in the first terminal, or the first indication information is configured by the network device for the first terminal.

A sequence of step 303, step 301, and step 302 is not limited, and step 303, step 301, and step 302 may be performed in sequence or simultaneously. For example, the first terminal may first obtain the first indication information; and then receive the first SRS from the second terminal, and measure the measurement result of the first SRS. Alternatively, the first terminal may first receive the first SRS from the second terminal, and then obtain the first indication information.

Optionally, the feature of the reported measurement result may include that the reported measurement result is an RSRP of a first SRS, that the reported measurement result is an RSSI, or that the reported measurement result is an RSRP and an RSSI of a first SRS.

S304: The first terminal sends, based on the first indication information, the information about the one or more measurement results to the network device.

Correspondingly, the network device receives the information about the one or more measurement results from the first terminal.

According to the communication method provided in this embodiment of this application, after a specific second terminal sends a first SRS, if the first terminal can obtain, through monitoring, the first SRS of the second terminal, the first terminal may measure signal strength of the first SRS, and obtain information about a measurement result of the first SRS. In addition, the first terminal may further report the information about the measurement result to the network device, so that the network device can obtain measurement results of different second terminals. In this way, subsequently, the network device may learn, based on one or more measurement results, of degrees of CLI caused by the different second terminals to the first terminal, and perform some CLI reduction operations.

In addition, when the network device does not obtain a measurement result, the network device may learn, based on second indication information corresponding to the measurement result, of a specific second terminal that causes interference to the first terminal. For example, when the first terminal measures a specific first SRS, and feeds back second indication information of the first SRS to the network device, the network device can determine a transmit end of the first SRS, where the second indication information includes, but is not limited to, at least one of a sequence of the first SRS, a sequence set of the first SRS, or a resource identifier of the first SRS. For example, the first terminal measures a specific first SRS, and feeds back a resource identifier of the first SRS to the network device. Therefore, the network device may know a specific second terminal that sends the first SRS by using a resource indicated by the resource identifier, and the network device may determine an interference source that causes CLI to the first terminal.

The following describes different manners in which the first terminal reports a measurement result when the first indication information is different, that is, specific implementations of S303 and S304. In the following procedures, that the first indication information is configured by the network device is used as an example. For an implementation procedure in which the first indication information is preconfigured in the terminal, refer to the following descriptions. Details are not emphatically described in this embodiment of this application.

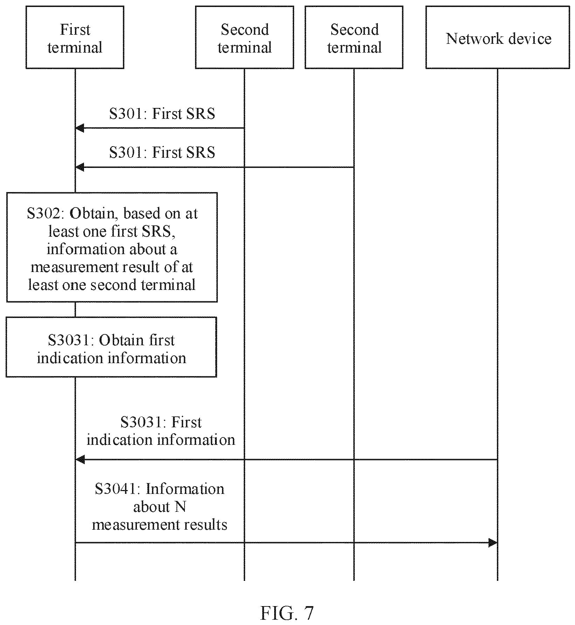

In some embodiments, referring to FIG. 7, S303 may be specifically implemented as follows.

S3031: The first terminal receives the first indication information from the network device.

The first indication information indicates the first terminal to send information about N largest measurement results in the measurement result of the at least one second terminal. In other words, the first indication information indicates the first terminal to send N largest measurement results in the measurement result of the at least one second terminal, and/or second indication information respectively corresponding to the N largest measurement results; or send N smallest measurement results in the measurement result of the at least one second terminal, and/or second indication information respectively corresponding to the N smallest measurement results. N is an integer greater than or equal to 1. In other words, the first terminal may report the N largest measurement results, or report the second indication information respectively corresponding to the N largest measurement results, or report both the N largest measurement results and the second indication information respectively corresponding to the N largest measurement results. Alternatively, the first terminal may report the N smallest measurement results, or report the second indication information respectively corresponding to the N smallest measurement results, or report both the N smallest measurement results and the second indication information respectively corresponding to the N smallest measurement results. For a principle of similar descriptions below, refer to the descriptions herein.

Optionally, a value of N may be the same as a quantity of measurement results of the at least one second terminal. That is, the first terminal reports all measurement results obtained through monitoring. In this way, the network device receives all the measurement results.

Because signal strength of first SRSs of different second terminals can be comprehensively and accurately reflected by using all the measurement results, the network device can learn of comprehensive and accurate CLI statuses between the first terminal and the different second terminals, and further perform some CLI reduction operations based on the accurate CLI statuses.

Optionally, the value of N may be less than the quantity of measurement results of the at least one second terminal. Only a part of measurement results are reported, so that signaling overheads for reporting the measurement result are reduced.

Optionally, the N measurement results are the N largest measurement results in the measurement result of the at least one second terminal, that is, a feature of a reported measurement result is that the reported measurement result is a largest measurement result. N is an integer greater than or equal to 1. The value of N may be preconfigured in the terminal by a vendor according to a specification; or the value of N is from the network device to the terminal, and the terminal stores the value of N. In a possible implementation, the quantity of measurement results of the at least one second terminal is greater than or equal to N, and the first terminal sends the N measurement results to the network device. For example, the first terminal obtains, through monitoring, five first SRSs from different second terminals, and values of measurement results of the five first SRSs are sequentially: a measurement result 3 (corresponding to an SRS 3 of UE 3) > a measurement result 2 (corresponding to an SRS 2 of UE 2) > a measurement result 5 (corresponding to an SRS 5 of UE 5) > a measurement result 4 (corresponding to an SRS 4 of UE 4) > a measurement result 1 (corresponding to an SRS 1 of UE 1). Assuming that the value of N is 3, the first terminal separately reports the measurement results of the UE 3, the UE 2, and the UE 5 to the network device.

In this way, when a measurement result of a specific second terminal is larger, a degree of CLI caused by the second terminal to the first terminal is usually higher. The network device may roughly learn of a CLI status between the first terminal and another terminal based on a measurement result with a highest CLI degree, to perform some CLI reduction operations, thereby reducing CLI between the first terminal and the another terminal. It can be learned that only a part of measurement results are reported, so that signaling overheads for reporting the measurement result are reduced.

S304 may be specifically implemented as the following step:
S3041: The first terminal sends, based on the first indication information, the information about the N measurement results to the network device.

Correspondingly, the network device receives the information about the N measurement results from the first terminal.

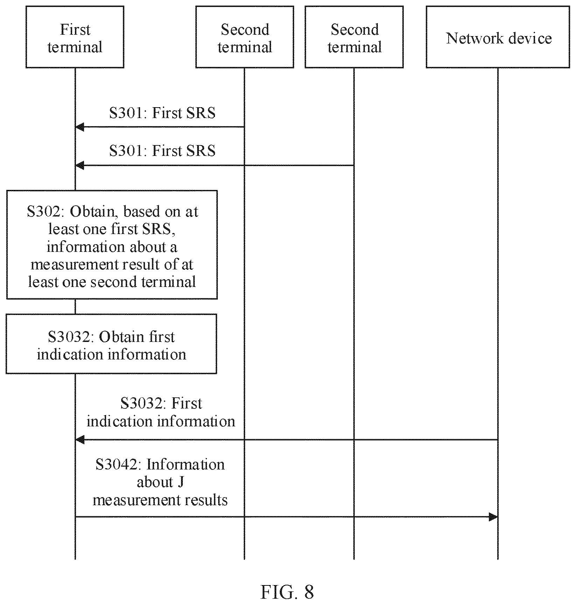

In some other embodiments, referring to FIG. 8, S303 may be specifically implemented as the following S3032.

S3032: The first terminal receives the first indication information from the network device.

The first indication information indicates the first terminal to send information about J measurement results that are in the measurement result of the at least one second terminal and that are greater than or equal to a first threshold, where the information about the J measurement results includes indication information of the J measurement results and/or second indication information, the second indication information is indication information, of a second terminal, corresponding to the J measurement results, and J is a positive integer.

Optionally, the one or more measurement results reported by the first terminal are the information about the J measurement results. J is a positive integer, and J is from the network device to the first terminal, or J is preconfigured in the first terminal. Specifically, J measurement results reported by the first terminal are the J measurement results that are in the measurement result of the at least one second terminal and that are greater than or equal to the first threshold. In this way, only a part of measurement results are reported, so that signaling overheads for reporting the measurement result can be reduced. For example, if the first terminal obtains, through monitoring, five first SRSs from other terminals, and J is 3, the first terminal reports three measurement results greater than or equal to the first threshold. In a case, if a quantity of measurement results greater than or equal to the first threshold is less than J, for example, there is only one measurement result greater than or equal to the first threshold, the first terminal may report only the measurement result. Alternatively, the first terminal reports the measurement result, then selects two largest measurement results from remaining four measurement results, and reports the two largest measurement results. In another case, if there is no measurement result greater than or equal to the first threshold, the first terminal may not report a measurement result. Alternatively, J=3 measurement results are randomly selected for reporting. In another case, when a quantity of measurement results greater than or equal to the first threshold is greater than J, the first terminal reports only J measurement results. Alternatively, the first terminal reports all measurement results greater than or equal to the first threshold.

Certainly, another threshold, for example, a third threshold may alternatively be set. Optionally, the first terminal reports a measurement result greater than or equal to the third threshold. Optionally, when there is no measurement result greater than or equal to the third threshold, the first terminal reports one or M largest measurement results. 1 or M is configured by the network device, or 1 or M is preconfigured in the first terminal. M is a positive integer.

Optionally, the foregoing thresholds may be preconfigured in the terminal, or may be from the network device to the terminal. Alternatively, some thresholds are preconfigured in the terminal, and some thresholds are configured by the network device.

Different from the measurement result reporting manner shown in FIG. 7, where the N measurement results reported in the procedure shown in FIG. 7 may be less than the preset first threshold, according to the procedure shown in FIG. 8, UE may be indicated to report the information about the J measurement results greater than or equal to the first threshold. When a quantity of measurement results that are in measurement results actually obtained by the UE through measurement and that are greater than or equal to the first threshold is less than J, only a measurement result greater than or equal to the first threshold may be reported. "Less" means less than.

In this way, only a part of measurement results are sent, so that signaling overheads can be reduced. In addition, J largest measurement results may be sent, so that the network device learns of a second terminal that causes severer CLI to the first terminal, and this helps the network device formulate an interference reduction policy based on severest CLI. Alternatively, J smallest measurement results are reported, so that the network device can learn of a second terminal that causes relatively weak CLI to the first terminal, and may not perform another operation on the second terminal.

S304 may be specifically implemented as the following S3042.

S3042: The first terminal sends, to the network device based on the first indication information, the information about the J measurement results that are in the measurement result of the at least one second terminal and that are greater than or equal to the first threshold. The information about the J measurement results includes indication information of the J measurement results and/or second indication information, and the second indication information is indication information, of a second terminal, corresponding to the J measurement results.

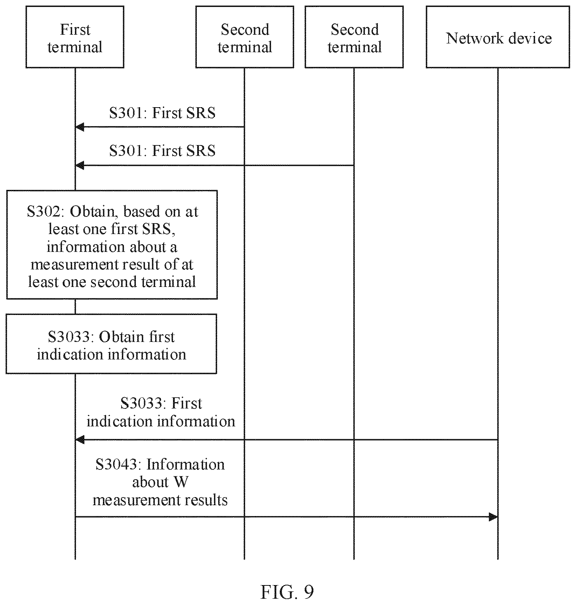

In some other embodiments, referring to FIG. 9, the foregoing S303 may be specifically implemented as the following S3033.

S3033: The first terminal receives the first indication information from the network device.

The first indication information indicates the first terminal to send information about W measurement results that are in the measurement result of the at least one second terminal and that are less than or equal to a second threshold. The information about the W measurement results includes indication information of the W measurement results and/or second indication information, where the second indication information is indication information, of a second terminal, corresponding to the W measurement results, and W is a positive integer.

For example, if a quantity of measurement results of the at least one second terminal is greater than W, the first terminal reports W measurement results. In this way, signaling overheads can be reduced. In a case, if the quantity of measurement results of the at least one second terminal is less than W, the first terminal may report all measurement results of the at least one second terminal. In a case, if there is no measurement result less than or equal to the second threshold, the first terminal may randomly select W measurement results (for example, select W smallest measurement results) from the measurement result of the at least one second terminal, and report the W measurement results. Alternatively, if there is no measurement result less than or equal to the second threshold, the first terminal may not report any measurement result. A quantity of measurement results reported by the first terminal is not specifically limited in this embodiment of this application.

The foregoing S304 may be specifically implemented as the following S3043.

S3043: The first terminal sends, to the network device based on the first indication information, the information about the W measurement results that are in the measurement result of the at least one second terminal and that are less than or equal to the second threshold. The information about the W measurement results includes the indication information of the W measurement results and/or the second indication information, where the second indication information is the indication information, of the second terminal, corresponding to the W measurement results.

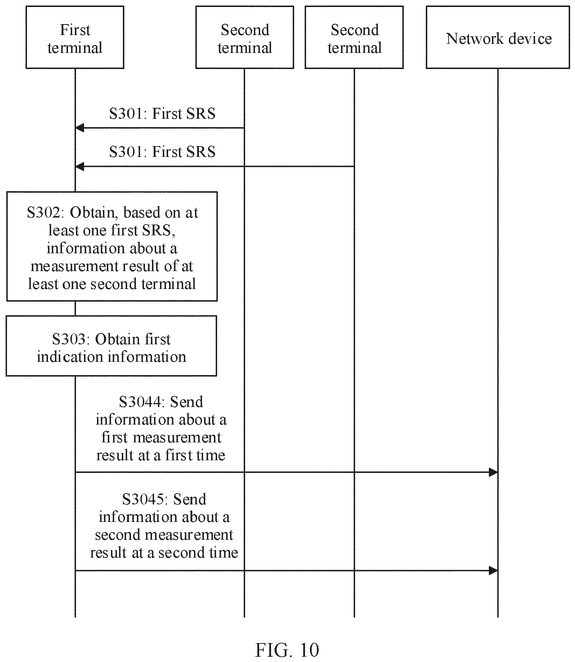

In some other embodiments, referring to FIG. 10, the foregoing S304 may alternatively be implemented as the following steps.

S3044: The first terminal sends information about a first measurement result to the network device at a first time. The information about the first measurement result includes the first measurement result and/or second indication information corresponding to the first measurement result.

S3045: The first terminal sends information about a second measurement result to the network device at a second time, that is, sends the second measurement result and/or second indication information corresponding to the second measurement result, where an interval between the first time and the second time is a preset time period. A difference between the second measurement result and the first measurement result is greater than or equal to a preset difference.

In this application, the first time has no correlation with a first time period, and the second time has no correlation with a second time period.

In other words, there is a time interval between moments at which different measurement results are reported. In a possible implementation, the difference between the second measurement result and the first measurement result is greater than or equal to the preset difference. In other words, when measurement results of two times are reported, the first terminal reports a measurement result of a second time only when determining that a difference between the measurement result of the second time and a measurement result of a first time is greater than or equal to the preset difference.

A time interval between the two times of reporting, that is, a preset time period, may be preconfigured, or may be from the network device to the first terminal. The preset difference may be preconfigured, or may be from the network device to the first terminal.

The measurement results of the two times may be information about measurement results specific to a first SRS of a same second terminal. In other words, the first SRS of the second terminal may be measured for a plurality of times, and measurement results of the plurality of times are periodically reported. That the UE 1 is the first terminal and the UE 2 is the second terminal is used as an example. In a process in which the UE 1 periodically reports a measurement result of the UE 2, a difference between measurement results of two times is greater than or equal to the preset difference. This means that a measurement result of a second time is greater than a measurement result of a first time, and a difference between the measurement result of the second time and the measurement result of the first time is equal to the preset difference. Alternatively, the measurement result of the second time is greater than the measurement result of the first time, and the difference between the measurement result of the second time and the measurement result of the first time is greater than the preset difference. Alternatively, that the difference between the measurement results of the two times is greater than or equal to the preset difference may be that the measurement result of the second time is less than the measurement result of the first time, and the difference between the measurement result of the second time and the measurement result of the first time is equal to the preset difference. Alternatively, the measurement result of the second time is less than the measurement result of the first time, and the difference between the measurement result of the second time and the measurement result of the first time is greater than the preset difference. In other words, only when the measurement result of the second time greatly differs from the measurement result of the first time, the first terminal reports the measurement result that is of the second time and that is specific to the same second terminal. According to the foregoing method, for a same second terminal, a first SRS may be measured for a plurality of times, to improve accuracy of a measurement result of the first SRS of the second terminal. Further, measurement results with similar values usually indicate that a position, a signal quality, or the like of the second terminal does not change, or changes slightly. In this case, the obtained measurement result of the first SRS of the second terminal may be redundant information, and the network device may not need the redundant information for decision-making. Therefore, in this embodiment of this application, the first terminal reports only the measurement result that is of the second time and that greatly differs from the measurement result of the first time. In this way, the first terminal can be prevented from reporting a redundant measurement result with a similar value, and signaling overheads are reduced.

Alternatively, the measurement results of the two times may be information about measurement results specific to first SRSs of different second terminals. For example, that the first terminal is the UE 1, and second terminals are the UE 2 and the UE 3 is used as an example. At the first time, the UE 1 sends a measurement result of a first SRS of the UE 2 to the network device. At the second time, the UE 1 sends a measurement result of a first SRS of the UE 3 to the network device. In this case, that the difference between the measurement results of the two times is greater than or equal to the preset difference may be that the measurement result of the UE 3 is greater than the measurement result of the UE 2, and a difference between the measurement result of the UE 3 and the measurement result of the UE 2 is greater than or equal to the preset difference. Alternatively, that the difference between the measurement results of the two times is greater than or equal to the preset difference may be that the measurement result of the UE 3 is less than the measurement result of the UE 2, and the difference between the measurement result of the UE 3 and the measurement result of the UE 2 is greater than or equal to the preset difference.

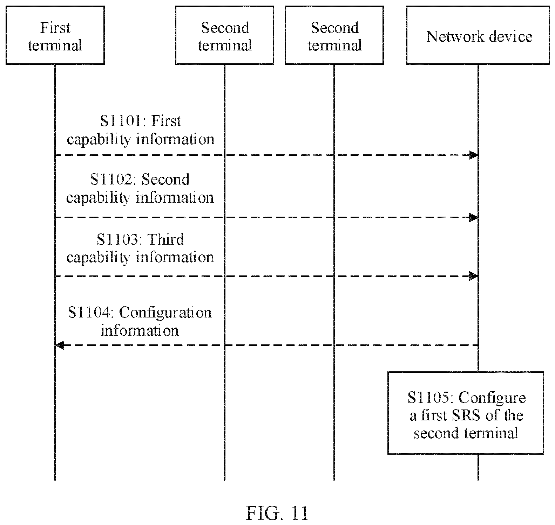

In some other embodiments, the first terminal, the second terminal, and the network device may configure the first SRS through some interaction procedures, to help the first terminal measure the first SRS. Specifically, referring to FIG. 11, an interaction procedure includes the following steps.

S1101: The first terminal sends first capability information to the network device.

Correspondingly, the network device receives the first capability information from the first terminal.

The first capability information indicates capability information of CLI measurement. The first capability information includes at least one of the following: a quantity of first SRSs that can be monitored by the first terminal in a time unit, whether the first terminal can monitor consecutive symbols, a maximum quantity of symbols that can be monitored by the first terminal in a time unit, or a maximum quantity of consecutive symbols that can be monitored by the first terminal in a time unit. The time unit may be a slot (slot). One time unit includes one slot, or includes a plurality of slots, or includes one duration duration, where one duration includes one or more slots.

In another embodiment, step S1101 is optional, that is, this step may not be performed, and the following steps continue to be performed.

In some other embodiments, the first terminal may further report the first capability information to an operation, administration, and maintenance (operation administration management, OAM) system.

S1102: The first terminal sends second capability information to the network device.

Correspondingly, the network device receives the second capability information from the first terminal. The second capability information indicates a capability of the first terminal for reporting a measurement result. The second capability information indicates a quantity of measurement results that can be reported by the first terminal to the network device, and the measurement result includes a measurement result specific to at least one first SRS. A measurement result of a first SRS indicates signal strength of the first SRS from a second terminal, and may further indicate a degree of CLI caused by the second terminal to the first terminal. For details of the measurement result of the first SRS, refer to the following descriptions. In addition, when a measurement result is further mentioned in the following, the measurement result usually refers to a measurement result specific to a first SRS. This is uniformly described herein, and details are not described again in the following.

Optionally, the second capability information may also be referred to as a reporting capability of the first terminal.

The measurement result may further include a measurement result of another type. For example, the measurement result may include a measurement result of an RSRP, a measurement result of an RSRQ, or a measurement result of a received signal strength indicator (received signal strength indicator, RSSI). In other words, the first terminal enables, by using the second capability information, the network device to learn of a quantity of measurement results that are specific to RSRPs and that can be reported by the first terminal, and/or learn of a quantity of measurement results specific to RSRQs, and/or learn of a quantity of measurement results specific to RSSIs, and/or learn of a quantity of measurement results that are of first SRSs and that can be reported. Further, the network device performs related configuration for the first terminal based on the quantity of measurement results that can be reported by the first terminal.

In another embodiment, step S1102 is optional, that is, this step may not be performed, and the following steps continue to be performed.

S1103: The first terminal sends third capability information to the network device.

Correspondingly, the network device receives the third capability information from the first terminal.

The third capability information indicates a multiplexing relationship between a second resource and a first resource for receiving a first SRS, and the multiplexing relationship includes at least one of time division multiplexing or frequency division multiplexing. The frequency division multiplexing is specifically: The first resource and the second resource completely overlap in time domain, and are adjacent or do not overlap in frequency domain; or the first resource and the second resource partially overlap (overlap) in time domain, and are adjacent or do not overlap in frequency domain. The time division multiplexing is specifically: The first resource and the second resource completely overlap in frequency domain, and are adjacent or do not overlap in time domain; or the first resource and the second resource partially overlap (overlap) in frequency domain, and are adjacent or do not overlap in time domain.

The first resource is a resource used to receive the first SRS. The second resource is a resource used for a data transmission. The data transmission includes any one or more of the following: a physical downlink shared channel (physical downlink shared channel, PDSCH), a physical uplink shared channel (physical uplink shared channel, PUSCH), a physical random access channel (physical random access channel, PRACH), a physical downlink control channel (physical downlink control channel, PDCCH), a channel state information reference signal (channel state indicator reference signal, CSI-RS), a physical uplink control channel (physical uplink control channel, PUCCH), a physical sidelink control channel (physical sidelink control channel, PSCCH), a physical sidelink shared channel (physical sidelink shared channel, PSSCH), or a physical sidelink feedback channel (physical sidelink feedback channel, PSFCH). Certainly, the data transmission may alternatively be a data transmission of another form.

It should be noted that, that the third capability information indicates the multiplexing relationship between the first resource and the second resource may be that the third capability information indicates one or more specific multiplexing relationships between the first resource and the second resource, and the resource multiplexing relationship may be supported by the first terminal. For example, the third capability information indicates that time division multiplexing is performed between the first resource and the second resource. Alternatively, the third capability information indicates one or more specific multiplexing relationships that cannot exist between the first resource and the second resource, that is, the one or more specific resource multiplexing relationships that are not supported by the first terminal. For example, the third capability information indicates that frequency division multiplexing cannot be performed between the first resource and the second resource, or that the first resource and the second resource cannot have an inclusion (for example, overlapping) relationship in time domain and frequency domain, or that the first resource and the second resource cannot overlap in time domain and frequency domain.

In this way, when receiving the third capability information, and configuring the first resource and the second resource for the terminal, the network device properly performs resource configuration based on whether the terminal supports the resource multiplexing relationship, to reduce a probability of a conflict between the first resource and the second resource.

In some embodiments, the resource occupied by the first SRS is different from a resource used for a downlink transmission, and the resource occupied by the first SRS is different from a resource used for an uplink transmission. The downlink transmission includes a PDCCH, a PDSCH, a synchronization signal (synchronization signal, SS), or a physical broadcast channel (physical broadcast channel, PBCH). The uplink transmission includes at least one of a PUCCH, a PUSCH, a PRACH, or a second SRS. The second SRS is not an SRS used to measure CLI. Certainly, the uplink transmission or the downlink transmission may alternatively be an uplink transmission or a downlink transmission of another form.

In other words, when configuring the uplink transmission or the downlink transmission, the network device considers whether the uplink transmission or the downlink transmission overlaps the first SRS. If overlapping occurs, the network device configures a resource as a resource used for the uplink transmission or the downlink transmission, or configures the resource as a resource used to receive the first SRS, to avoid a conflict between the uplink or downlink transmission and the first SRS on a same resource.

Alternatively, behavior of the terminal is defined as follows: When the resource occupied by the first SRS and the resource used for the downlink transmission have a part of same resources, or the resource occupied by the first SRS and the resource used for the uplink transmission have a part of same resources, on the same resource, the first SRS is detected by the terminal and the downlink transmission is discarded by the terminal, or the downlink transmission is detected by the terminal and the first SRS is discarded by the terminal, or the first SRS is detected by the terminal and the uplink transmission is discarded by the terminal, or the uplink transmission is detected by the terminal and the first SRS is discarded by the terminal.

That the network device configures any one of the foregoing uplink transmissions is used as an example. On a same resource, the network device configures the resource as a resource used for the uplink transmission or a resource used to receive the first SRS. In addition, the network device may indicate the first terminal to preferentially detect the uplink transmission and skip detecting the first SRS when performing detection on the resource, that is, discard the first SRS. Alternatively, the first terminal preferentially detects the first SRS, and skips detecting the uplink transmission.

In another embodiment, step S1103 is optional, that is, this step may not be performed, and the following steps continue to be performed. When step S1103 is optional, the first terminal obtains the third capability information through presetting.

An execution sequence of S1101 to S1103 is not limited in this embodiment of this application. For example, the first terminal may first send the first capability information to the network device, and then send the second capability information to the network device; or the first terminal may first send the third capability information to the network device, and then send the first capability information to the network device.

Any one of the first capability information, the second capability information, or the third capability information may be placed by the terminal in a MAC packet or a data packet and sent to the network device.

S1104: The first terminal obtains configuration information.

Optionally, the first terminal obtains the configuration information from the network device. Alternatively, the configuration information is preconfigured in the first terminal. Alternatively, a part of the configuration information is received from the network device, and the other part of the configuration information is preset.

In a possible implementation, the network device determines the configuration information based on at least one of the foregoing capability information (for example, the second capability information) of the first terminal. Certainly, the network device may alternatively determine the configuration information based on a policy of the network device, and send the configuration information to the first terminal. A manner of determining the configuration information by the network device is not limited in this embodiment of this application.

In some embodiments, the configuration information indicates at least one of the following:

1. A reported measurement result is an RSRP, or an RSSI, or an RSRP and an RSSI. The measurement result indicates signal strength of a first SRS.

In this application, the measurement result indicated the signal strength of the first SRS is the RSRP, or the RSSI, or the RSRP and the RSSI. The RSRP may be replaced with an SRS-RSRP, or may be replaced with a CLI-RSRP. The RSSI may be replaced with an SRS-RSSI, or may be replaced with a CLI-RSSI.

2. Information about an available first resource or information about a configured first resource.

Optionally, the available first resource is a resource that can be used by an interfering terminal to send a first SRS. In a possible implementation, a resource pool may be specified in advance, and the resource pool is the available first resource. The information about the available first resource includes one or more of a location of a start slot (slot) of the resource pool, a quantity of slots of the resource pool, a location of a start orthogonal frequency division multiplexing (orthogonal frequency division multiplexing, OFDM) symbol in a slot, a quantity of symbols in a slot, a location of a start physical resource block (physical resource block, PRB), a quantity of PRBs, a location of a start resource element (resource element, RE), or a quantity of REs. Any one or more of a plurality of slots, a plurality of symbols, or a plurality of PRBs may be consecutive or nonconsecutive.

Optionally, the network device may also limit a minimum quantity of PRBs of the first resource. For example, when a COMB is equal to 2, the quantity of PRBs occupied by the first resource is set to be not less than 8; or when a COMB is equal to 4, the quantity of PRBs is set to be not less than 16.

In this way, subsequently, when the first terminal serves as an interfering terminal, the first terminal may select, from the available first resource (that is, the foregoing resource pool), a resource used to send the first SRS.

Optionally, the configured first resource is a resource that is used by an interfering terminal to send a first SRS. The information about the configured first resource includes one or more of a location of a start slot, a quantity of slots, a location of a start OFDM symbol in a slot, a quantity of symbols, a location of a start PRB, a quantity of PRBs, a location of a start RE, or a quantity of REs. Any one or more of a plurality of slots, a plurality of symbols, a plurality of PRBs, or a plurality of REs may be consecutive or nonconsecutive.

3. Reference information used to measure an RSSI.

The reference information used to measure the RSSI (in other words, used to transmit the RSSI) includes one or more of a reference subcarrier spacing (subcarrier spacing, SCS), a location of a start slot used to measure the RSSI, a quantity of slots used to measure the RSSI, a location of a start OFDM symbol used to measure the RSSI, a quantity of symbols used to measure the RSSI, a location of a start PRB used to measure the RSSI, a quantity of PRBs used to measure the RSSI, a location of a start RE used to measure the RSSI, or a quantity of REs used to measure the RSSI. Any one or more of a plurality of slots, a plurality of symbols, a plurality of PRBs, or a plurality of REs may be consecutive or nonconsecutive.

After the reference subcarrier spacing used for RSSI measurement is configured, a subcarrier spacing in an active (active) bandwidth part (bandwidth part, BWP) in which the first terminal is located may be different from the reference subcarrier spacing used for the RSSI measurement. Symbols and bandwidth defined by different subcarrier spacings may be different. For example, it is assumed that the subcarrier spacing in the active BWP is 20 kHz, and the reference subcarrier spacing used for the RSSI measurement is 40 kHz. In this case, when the network device configures the first terminal to detect four symbols (that is, symbols used for the RSSI measurement) when measuring the RSSI, because the reference subcarrier spacing used for the RSSI measurement is doubled (from 20 kHz to 40 kHz) when the first terminal measures the RSSI, the first terminal actually detects two symbols.

In a case, the network device configures the quantity of symbols used for the RSSI measurement as an odd number. In this way, a quantity of symbols that are actually measured and that are derived by the first terminal based on a relationship between the subcarrier spacing in the active BWP and the reference subcarrier spacing used for the RSSI measurement may not be an integer. Therefore, the quantity of symbols that are actually measured by the terminal and bandwidth of the terminal need to be redetermined.

In a possible implementation, the quantity of symbols that are actually measured is determined in a manner of rounding down or rounding up. For example, UE is configured by the network device to measure seven symbols, but the reference subcarrier spacing used for the RSSI measurement is twice the subcarrier spacing in the active BWP. Therefore, in this case, the UE is actually configured to measure 3.5 symbols. Optionally, after 3.5 is rounded down, the UE actually measures three symbols. Alternatively, after 3.5 is rounded up, the UE actually measures four symbols. In other words, when a symbol or a quantity of symbols defined by the reference subcarrier spacing used for the RSSI measurement does not meet a requirement, defined by the SCS in the active BWP, of an integer quantity of symbols, the UE may determine the quantity of symbols that are actually measured in the manner of rounding up or rounding down, to meet the requirement, defined by the SCS in the active BWP, of an integer quantity of symbols.

In addition, when at least one of an RB, a quantity of RBs, a PRB, a quantity of PRBs, an RE, or a quantity of REs defined by the reference subcarrier spacing used for the RSSI measurement does not meet a requirement, defined by the SCS in the active BWP, of an integer quantity of RBs/REs, the UE may also calculate any one of an integer quantity of RBs/REs with reference to the foregoing method. In a possible implementation, the quantity of symbols may be rounded down, and the quantity of RBs/REs may be rounded up; or the quantity of symbols may be rounded up, and the quantity of RBs/REs may be rounded down; or another rounding manner is used. The rounding manner may be configured or preset in the terminal.

4. Reference information used to measure an RSRP.

For details, refer to the information about the configured first resource. Details are not described herein again.

It should be noted that the reference information used to measure the RSRP and the reference information used to measure the RSSI may be separately configured, and do not affect each other. The configured transmission resources may have the following several relationships. For example, a first SRS used to measure an RSRP occupies a resource 1, and a first SRS used to measure an RSSI occupies a resource 2. The resource 1 and the resource 2 may partially overlap, or may not overlap, or may completely overlap. In this application, "occupy a resource" may be replaced with "use a resource".

In addition, a quantity of RSSIs that can be reported by the first terminal and a quantity of RSRPs that can be reported by the first terminal may be different or may be the same. The quantity may be flexibly configured based on an actual application scenario.

5. At least one of a sequence (sequence), a sequence set, or resource indication information, of a first SRS, used for sending/measurement. Each sequence set includes at least one sequence.

Specifically, the configuration information is a root sequence or a root sequence set of the first SRS, and each root sequence set includes at least one root sequence. In this way, a cyclic shift may be performed based on the configured root sequence, to obtain the first SRS that needs to be sent/measured. Alternatively, a root sequence is randomly selected from the root sequence set, and a cyclic shift is performed based on the root sequence, to obtain the first SRS that needs to be sent/measured.

Specifically, the configuration information is any one or more of a root sequence, a cyclic shift, a root sequence set, or a cyclic shift set of the first SRS. Each root sequence set includes at least one root sequence. In this way, the first SRS that needs to be sent/measured may be obtained based on the configured root sequence and the configured cyclic shift. Alternatively, a root sequence is randomly selected from the root sequence set, and a cyclic shift is performed based on the root sequence, to obtain the first SRS that needs to be sent/measured.

Specifically, the resource indication information includes a resource or a resource set used for transmission. The resource used for the transmission may be indicated by using a resource identifier (index/ID), for example, an SRS resource index. The resource set may be indicated by using a resource set identifier (index/ID), for example, an SRS set resource index or an SRS resource set index.

6. Whether to perform rate matching for the first terminal.

The performing rate matching for the first terminal means that uplink or downlink information transmitted by the first terminal is repeated (repeated) or punctured (punctured), to match a bearer capability of a physical channel, so that a transmission rate of the uplink or downlink information meets a requirement. For details of the rate matching, refer to the current technology. Details are not described herein. In this way, subsequently, if the rate matching needs to be performed, the first terminal sends information in a repetition or puncturing manner, to match the bearer capability of the physical channel.

7. Information about a measurement result includes both the measurement result and second indication information.

When a measurement result is reported, second indication information of a first SRS used for measurement is also reported. The second indication information of the first SRS includes one or more of resource indication information of the first SRS or a sequence of the first SRS. In the embodiments of this application, the resource indication information of the first SRS includes one or more of a resource identifier of the first SRS, a resource index of the first SRS, a resource identifier of a first SRS set, or a resource index of a first SRS set. That is, sending information about one or more measurement results to the network device includes: reporting second indication information of a first SRS used for measurement while sending a measurement result. The first SRS set includes one or more first SRSs, and the resource identifier of the first SRS set may be identifiers of all resources for transmitting a plurality of first SRSs.

In other words, the configuration information may indicate the first terminal to report some other information while reporting the measurement result. In this way, information such as a resource or a sequence related to the first terminal may be carried by one message. The measurement result and the second indication information have a one-to-one correspondence in a reported message.

8. Information about a measurement result includes only second indication information. When information about a measurement result is reported, only second indication information of a first SRS that is used for measurement and that meets a measurement result requirement is reported. That the measurement result requirement is met means that a first indication information requirement is met. The second indication information of the first SRS includes one or more of resource indication information of the first SRS or a sequence of the first SRS. In the embodiments of this application, the resource indication information of the first SRS includes one or more of a resource identifier of the first SRS, a resource index of the first SRS, a resource identifier of a first SRS set, or a resource index of a first SRS set. That is, sending information about one or more measurement results to the network device includes: reporting second indication information of a first SRS used for measurement while sending a measurement result. The first SRS set includes one or more first SRSs, and the resource identifier of the first SRS set may be identifiers of all resources for transmitting a plurality of first SRSs.

In other words, the configuration information may indicate the first terminal to report only some other information when the first terminal reports information about the measurement result. In this way, the measurement result is not directly reported, and information such as a resource or a sequence related to the first terminal may be carried. The measurement result and the second indication information have a one-to-one correspondence.

9. Information about a measurement result includes only the measurement result.

In some other embodiments, the configuration information may alternatively indicate a manner of reporting a measurement result by the first terminal. The manner of reporting a measurement result includes reporting a quantity of measurement results and reporting a feature of the measurement result. When the manner of reporting a measurement result is at least one or more of the following manners, the first terminal performs reporting in the manner, indicated by the configuration information, of reporting a measurement result. Specifically, the manner of reporting a measurement result may be at least one or more of the following manners.

Manner 1: The first terminal reports information about N measurement results according to the method procedure shown in FIG. 7.

Manner 2: Different thresholds may be set, and measurement results that need to be reported are determined based on the different thresholds. That is, the first terminal reports information about a measurement result according to the method procedure shown in FIG. 8.

Manner 3: The first terminal reports information about W measurement results according to the method procedure shown in FIG. 9.

Manner 4: The first terminal reports information about K measurement results of a second terminal in a first cell, and reports information about I measurement results of a second terminal in a second cell. I and K are both positive integers, and may be the same or may be different. In other words, for second terminals in different cells, the first terminal may set different upper limits of quantities of measurement results for the different cells.

Manner 5: A measurement result reported by the first terminal is H largest measurement results that are in the measurement result of the at least one second terminal and that are greater than or equal to a result threshold, and H is a positive integer.

Manner 6: The first terminal reports information about different measurement results based on a preset time interval. That is, the first terminal reports a measurement result according to the procedure shown in FIG. 10.

Manner 7: The first terminal reports second indication information of a first SRS.

The reporting second indication information of a first SRS includes reporting the second indication information corresponding to a measurement result while reporting the measurement result. That is, the second indication information is reported with the measurement result that has a one-to-one correspondence with the second indication information.

Optionally, when two measurement results are reported, respective resource identifiers/resource indexes of two first SRSs corresponding to the two measurement results are also reported, so that when obtaining the measurement results, the network device learns of specific terminals from which interference corresponding to the measurement results comes.

Optionally, when two measurement results are reported, respective resource identifiers/resource indexes of first SRS sets of two first SRSs corresponding to the two measurement results are also reported, so that when obtaining the measurement results, the network device learns of specific terminals from which interference corresponding to the measurement results comes.

Optionally, when two measurement results are reported, respective resource identifiers/resource indexes of two first SRSs corresponding to the two measurement results and respective resource identifiers/resource indexes of first SRS sets of the two first SRSs are also reported, that is, the respective resource identifiers of the two first SRSs and the respective resource identifiers of the first SRS sets of the two first SRSs are also reported; or the respective resource identifiers of the two first SRSs and the respective resource indexes of the first SRS sets of the two first SRSs are also reported; or the respective resource indexes of the two first SRSs and the respective resource indexes of the first SRS sets of the two first SRSs are also reported; or the respective resource indexes of the two first SRSs and the respective resource identifiers of the first SRS sets of the two first SRSs are also reported. Therefore, when obtaining the measurement results, the network device learns of specific terminals from which interference corresponding to the measurement results comes.

Optionally, when two measurement results are reported, respective sequences of two first SRSs corresponding to the two measurement results are also reported, so that when obtaining the measurement results, the network device learns of specific terminals from which interference corresponding to the measurement results comes.

The reporting second indication information of a first SRS includes: reporting the second indication information with a measurement result, in one or more measurement results, that has a one-to-one correspondence with the second indication information.

Optionally, when two measurement results are reported, respective resource identifiers/resource indexes and respective sequences of two first SRSs corresponding to the two measurement results are also reported, so that when obtaining the measurement results, the network device learns of specific terminals from which interference corresponding to the measurement results comes.

Optionally, the sequence or the sequence set of the first SRS and the second indication information may be reported by using a same piece of configuration information. The sequence or the sequence set of the first SRS and the second indication information may be respectively reported by using two pieces of configuration information. This is not limited in this embodiment of this application.

Optionally, the reporting second indication information of a first SRS includes reporting only the second indication information, so that the network device can learn, without needing to obtain a measurement result, of a specific terminal that causes strongest or weakest interference.

Certainly, the first terminal may alternatively report the measurement result in another manner, and report another quantity of measurement results. In addition, the reported measurement result may further have another feature. Examples are not listed one by one herein in this embodiment of this application.

Any one or more of a value of N, J, M, K, I, or H, the first threshold, or the second threshold are configured by the network device through RRC signaling.

Optionally, in addition to performing reporting based on the configuration information of the network device, the first terminal may alternatively directly perform reporting based on any one or more of the foregoing manners of reporting a measurement result. In other words, the first terminal does not need to obtain the configuration information delivered by the network device to learn of the manner of reporting a measurement result, or the first terminal directly performs reporting based on presetting. In this application, reporting means that the terminal sends data information to the network device, where the data information includes any one or more of a measurement result or second indication information of the measurement result.

For example, the first terminal directly performs reporting in the manner 1, or the first terminal directly performs reporting in the manner 1 and the manner 6, or the first terminal directly performs reporting in the manner 2 and the manner 6.

In another embodiment, step S1104 is optional, that is, this step may not be performed, and the following steps continue to be performed. When step S1104 is optional, the first terminal obtains the configuration information through presetting.

S1105: The network device configures the first SRS of the second terminal.

In some embodiments, the network device configures the first SRS of the second terminal based on at least one of the foregoing pieces of capability information (for example, the first capability information).

Optionally, the first capability information may also be referred to as a measurement capability.

The following describes a method in which the network device configures the first SRS of the second terminal by using an example in which the time unit is a slot, the first terminal is the UE 1, and second terminals are the UE 2 and the UE 3.

Optionally, the network device learns, based on first capability information reported by the UE 1, that a quantity of first SRSs that can be monitored by the UE 1 in a slot is P, where P is an integer greater than or equal to 1. In this way, the network device configures a quantity of first SRSs that can be from the second terminal to be less than or equal to P. For example, if the quantity of first SRSs that can be monitored by the UE 1 in a slot is 8, and the UE 2 and the UE 3 multiplex a slot, the network device may configure the UE 2 to send a maximum of two first SRSs in a slot, and the network device configures the UE 3 to send a maximum of six first SRSs in the same slot. Alternatively, if the UE 2 and the UE 3 do not send first SRSs in a same slot, the network device may configure the UE 2 to send a maximum of eight first SRSs in a slot, and the network device configures the UE 3 to send a maximum of eight first SRSs in another slot. In this way, regardless of whether the UE 2 and the UE 3 multiplex a same slot to send the first SRSs, in a slot, the UE 2 or the UE 3 sends a maximum of eight first SRSs, which does not exceed an upper limit of the quantity of first SRSs monitored by the UE 1 in a slot.

Optionally, the network device learns, based on first capability information reported by the UE 1, that the UE 1 can monitor consecutive symbols, and correspondingly, the network device configures the UE 2 to send first SRSs on the consecutive symbols. Alternatively, the network device configures the UE 3 to send first SRSs on the consecutive symbols. Alternatively, if the UE 2 and the UE 3 multiplex a same slot to send first SRSs, the network device may allocate a plurality of consecutive symbols to the UE 2 and the UE 3 to send the first SRSs.

Optionally, the network device learns, based on first capability information reported by the UE 1, that a maximum quantity of symbols that can be monitored by the UE 1 in a slot is L, where L is an integer greater than or equal to 1. In this way, if the UE 2 and the UE 3 multiplex a same slot to send first SRSs, the network device may configure the UE 2 to send a first SRS in the slot by using a maximum of L1 symbols, and configure the UE 3 to send a first SRS in the slot by using a maximum of L2 symbols, where L1+L2 is less than or equal to L. Certainly, when the L1 symbols overlap the L2 symbols, L1+L2 may be greater than L, provided that it is ensured that L1 is less than or equal to L and L2 is less than or equal to L. Similarly, when the UE 2 and the UE 3 do not send first SRSs in a same slot, it can also be ensured that a maximum quantity of symbols used to send first SRSs in a slot does not exceed the quantity of symbols that can be monitored by the UE 1.

Optionally, the network device learns, based on first capability information reported by the UE 1, of a maximum quantity of consecutive symbols that can be monitored by the UE 1 in a slot. In this way, a quantity of consecutive symbols that are configured by the network device for the UE 2 or the UE 3 and that are used to send first SRSs is less than or equal to the maximum quantity of consecutive symbols.

Optionally, the quantity of first SRSs that can be monitored by the first terminal in a time unit may include a quantity of first SRSs that can be monitored in a first time unit and a quantity of first SRSs that can be monitored in a second time unit. When the first time unit is a slot, and the second time unit is a duration duration (where the duration is equal to X slots, and X is a positive integer), the network device learns, based on first capability information reported by the UE 1, that a quantity of first SRSs that can be monitored by the UE 1 in a slot is R, and a quantity of first SRSs that can be monitored in X slots is S. R is an integer greater than or equal to 1, and S is an integer greater than or equal to 1. In this way, the network device configures a quantity of first SRSs that can be from the second terminal in a slot to be less than or equal to R, and the network device configures a quantity of first SRSs that can be from the second terminal in X slots to be less than or equal to S. For example, if a quantity of first SRSs that can be monitored by the UE 1 in a slot is 8, a quantity of first SRSs that can be sent in X slots is 32, and the UE 2 and the UE 3 multiplex a slot, the network device may configure the UE 2 to send a maximum of two first SRSs in a slot, and the network device configures the UE 3 to send a maximum of six first SRSs in the same slot; and the network device may configure the UE 2 to send a maximum of eight first SRSs in X slots, and the network device configures the UE 3 to send a maximum of 24 first SRSs in the X same slots. Alternatively, if the UE 2 and the UE 3 do not send first SRSs in a same slot, the network device may configure the UE 2 to send a maximum of eight first SRSs in a slot, and the network device configures the UE 3 to send a maximum of eight first SRSs in the same slot. Alternatively, if the UE 2 and the UE 3 do not send first SRSs in X same slots, the network device may configure the UE 2 to send a maximum of 32 first SRSs in X slots, and the network device configures the UE 3 to send a maximum of 32 first SRSs in another group of X slots. In this way, regardless of whether the UE 2 and the UE 3 multiplex a same slot to send the first SRSs, in a slot, the UE 2 or the UE 3 sends a maximum of eight first SRSs, which does not exceed an upper limit of the quantity of first SRSs monitored by the UE 1 in a slot. Regardless of whether the UE 2 and the UE 3 multiplex X same slots to send the first SRSs, in X slots, the UE 2 or the UE 3 sends a maximum of 32 first SRSs, which does not exceed an upper limit of the quantity of first SRSs monitored by the UE 1 in X slots.

In some other embodiments, the network device may not configure the first SRS of the second terminal based on the first capability information reported by the first terminal. For example, the network device configures the first SRS of the second terminal based on a decision of the network device.

In some other embodiments, the network device configures no data transmission or reception on one or more symbols before or after a symbol used to receive a first SRS (that is, an SRS used to measure CLI), so that the terminal can perform correct rate matching. Certainly, the symbol may alternatively be configured in another manner, and some bits are repeated or punctured, to implement the rate matching.

Usually, distances between different interfering terminals (namely, second terminals) and an interfered terminal (namely, the first terminal) are different, so that time at which first SRSs of the different second terminals arrive at the first terminal may not be aligned. When an interval between cyclic shifts (cyclic shift, CS) of two first SRSs is relatively small, it is difficult for the first terminal to distinguish between specific second terminals from which the two first SRSs respectively come, and further, it is difficult to determine specific interference sources.

To resolve the foregoing problem, in some other embodiments, when resources of two second terminals are the same, root sequences of first SRSs of the two second terminals are different. That the resources of the two second terminals are the same may mean that one or more of time domain resources, frequency domain resources, or space domain resources of the two second terminals are the same. In this way, different first SRSs may be distinguished based on different root sequences, and specific second terminals from which the different first SRSs respectively come may be determined, to accurately determine interference sources.

In some other embodiments, when resources of two second terminals are the same, root sequences of first SRSs of the two second terminals are the same, and a difference between cyclic shifts of the first SRSs of the two second terminals is a first offset value.

Optionally the first offset value may be represented as $n_{srs}^{cs,max}/2$. $n_{srs}^{cs,max}$ is a maximum quantity of cyclic shifts when the first SRS is configured. The maximum quantity of cyclic shifts may be 12 or 8, or another preset value.

Optionally, the first offset value may alternatively be configured as a parameter of another format. In a manner, the first offset value may be set based on a configuration of an SRS port (port). The SRS port may be understood as an antenna port for sending an SRS. When the SRS port is set differently, the first offset value changes correspondingly. In another manner, the first offset value may be set based on a symbol interval, or may be set based on a relative distance between UEs.

Specifically, the first offset value is $U*n_{srs}^{cs,max}/2$. U is a configurable parameter. For example, U represents a quantity of SRS ports; in this case, U is a positive integer. Certainly, U may alternatively be a parameter related to a quantity of SRS ports. For example, U may be calculated based on the quantity of SRS ports according to a calculation rule. For example, U is the quantity of SRS ports. When the quantity of SRS ports is 1, the first offset value is $n_{srs}^{cs,max}/2$. When the quantity of SRS ports is 2, the first offset value is $2*n_{srs}^{cs,max}/2$. In this way, when first SRSs of different terminal devices that have different distances from a receive terminal device arrive at the receive terminal device, if a difference between CSs of the first SRSs is greater than or equal to the first offset value, it can be ensured that the receive terminal device can learn of the terminal devices from which the first SRSs respectively come when the distances are different.

In some other embodiments, a difference between CSs is less than or equal to a second offset value. Optionally, the second offset value may be represented as $V*n_{srs}^{cs,max}/2$. V is a configurable parameter. When first SRSs of different terminal devices that have different distances from a receive terminal device arrive at the receive terminal device, if a difference between CSs of the first SRSs is less than or equal to the second offset value, it can be ensured that a requirement on the difference between the CSs is not very high, so that a specific quantity of SRSs are available.

In some other embodiments, the OAM configures the first SRS of the second terminal based on the first capability information.

It should be noted that an execution sequence of S1101 to S1105 is not limited in this embodiment of this application. For example, the first terminal may simultaneously report each piece of capability information. Alternatively, the first capability information may be first reported, and then the second capability information and the third capability information are reported. The network device may send the configuration information to the first terminal after receiving one or more pieces of capability information; or the network device may first deliver the configuration information to the first terminal, and then receive one or more pieces of capability information of the first terminal. Alternatively, the configuration information is directly delivered to the first terminal even if one or more pieces of capability information of the first terminal are not received.

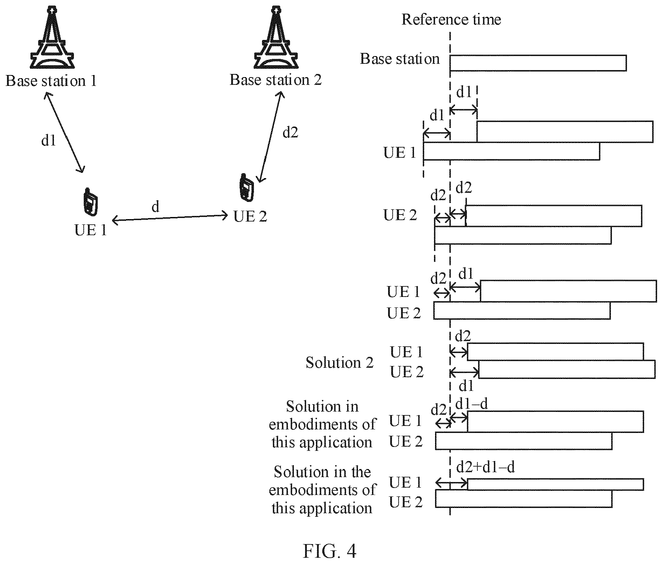

Usually, when a terminal communicates with a base station, timing synchronization needs to be performed. In other words, the base station needs to know a specific receiving occasion on which information is received from the terminal or a specific occasion on which information is sent to the terminal; and the terminal device also needs to know a specific occasion on which information is received from the base station or a specific occasion on which information is sent to the base station. This helps information receiving or sending on a correct receiving or sending occasion. Referring to FIG. 4, a time at which a base station sends a downlink message is used as a reference time, uplink sending of UE 1 should be performed d1/c earlier than the reference time, downlink receiving of the UE 1 should be performed d1/c later than the reference time, and d1 is a distance between the UE 1 and a base station 1. Similarly, for occasions of uplink sending and downlink receiving of UE 2, refer to corresponding occasions of the UE 1. This facilitates timing synchronization between the UE and the base station.

In the current technology, for timing synchronization in a system with CLI, two solutions are provided. Solution 1: A terminal transmits a first SRS while transmitting a physical uplink shared channel (physical uplink shared channel, PUSCH), that is, a timing advance (timing advance, TA) for transmitting the first SRS is equal to a value of a TA for transmitting the PUSCH. In this way, although uplink and downlink timing synchronization can be performed, transmission of the PUSCH and transmission of the first SRS may occupy a same time-frequency resource, and consequently, the terminal is likely to fail to correctly demodulate the PUSCH to cause a loss of useful data. Solution 2: In this method, it needs to be assumed that the UE 1 and the UE 2 are very close to each other. Therefore, a distance d shown in FIG. 1a may be ignored. The UE 2 sends the first SRS d2/c later than the reference time, and the UE 1 detects the first SRS d1/c later than the reference time. In the method, the UE 2 delays a sending time by d2/c, which is equivalent to that a symbol used to transmit the first SRS is also correspondingly shifted backward. For example, originally, the first SRS is transmitted by using the seventh symbol in the first slot. Currently, the sending time needs to be delayed by d2/c. Correspondingly, the first SRS may be transmitted by using the first symbol in a next slot (the second slot). However, the first symbol in the second slot is likely to be configured to transmit the PUSCH. Consequently, a conflict between the first SRS and the PUSCH occurs on the symbol, and it is unfavorable for the terminal to demodulate the PUSCH.

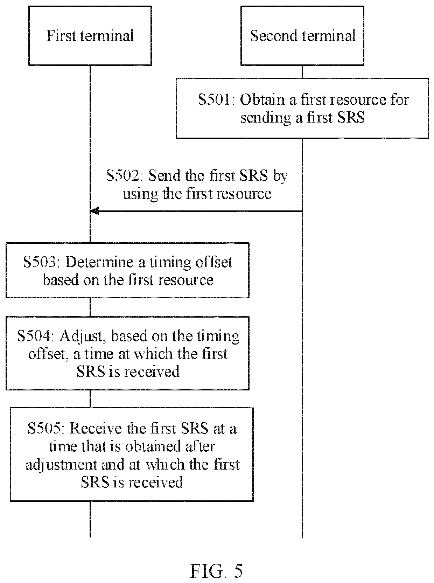

To resolve the foregoing technical problem, an embodiment of this application further provides a timing synchronization method. Referring to FIG. 5, the timing synchronization method includes the following steps.

S501: A second terminal obtains a first resource for sending a first sounding reference signal SRS.

There is a correspondence between a first resource and geographical position information of the second terminal. A plurality of pieces of geographical position information respectively correspond to a plurality of first resources. When the second terminal is located at different geographical positions, first resources used by the second terminal to send the first SRS are different. In a possible implementation, a preset geographical area may be divided into P (P is a positive integer) sub-areas. Each sub-area corresponds to one piece of geographical position information. The geographical position information may be, for example, an identifier, code, or a number of the sub-area. P may be preconfigured in the terminal, or configured by a network device. Different pieces of geographical position information correspond to different resources.

The first resource may be a time domain resource, a frequency domain resource, a space domain resource, a code domain resource, or the like. A type of the first resource is not specifically limited in this embodiment of this application. Corresponding to different pieces of geographical position information, that the second terminal sends the first SRS by using different resources means that the second terminal sends the first SRS by using different time domain resources, sends the first SRS by using different frequency domain resources, sends the first SRS by using different space domain resources, or sends the first SRS by using different code domain resources. For example, the resource is the time domain resource. When the second terminal is located in a sub-area 1, the first SRS is from using the sixth symbol in a slot; when the second terminal is located in a sub-area 2, the first SRS is from using the seventh symbol in a slot. For example, the resource is the space domain resource. When the second terminal is located in a sub-area 1, the first SRS is from using a first antenna port; when the second terminal is located in a sub-area 2, the first SRS is from using a second antenna port.

Optionally, the first resource is a resource preconfigured in the terminal. In other words, the first resource is a resource preconfigured based on the geographical position information of the second terminal. For example, the correspondence between a resource and geographical position information is preconfigured in the terminal. In this way, when sending the first SRS, the second terminal may query the correspondence, and determine, based on the correspondence, a specific resource that needs be used to send the first SRS at a current geographical position.

Optionally, the second terminal receives an SRS configuration message from the network device, where the SRS configuration message indicates the first resource corresponding to the geographical position information of the second terminal. Specifically, the network device indicates the first resource to the second terminal in at least one of the following manners.

Manner 1: The SRS configuration message is a broadcast message. Specifically, the network device periodically sends the broadcast message. The second terminal receives the broadcast message from the network device, and determines, based on the broadcast message, a resource that can be used to send the first SRS at a current geographical position. The broadcast message carries the correspondence between geographical position information and a resource. The correspondence may include a relationship between a plurality of pieces of geographical position information and a plurality of resources. For example, the correspondence may be {geographical position information 1-resource 1; geographical position information 2-resource 2; ...; geographical position information Q-resource Q}. Certainly, the correspondence may alternatively be of another format, for example, a table format. A format of the correspondence is not limited in this embodiment of this application. The second terminal receives and stores the correspondence. Subsequently, when the second terminal needs to send the first SRS, the second terminal queries the correspondence to learn of the resource corresponding to the current geographical position, and sends the first SRS by using the corresponding resource.

Manner 2: Before sending the first SRS, the second terminal sends an SRS resource request to the network device, where the SRS resource request is used to request the first resource for sending the first SRS.

Optionally, in the manner 2, the SRS resource request of the second terminal includes current geographical position information of the second terminal. In this way, the network device configures a corresponding first resource for the second terminal based on the current geographical position information of the second terminal, and sends an SRS configuration message to the second terminal, to indicate the first resource corresponding to a current geographical position of the second terminal.

Alternatively, the SRS resource request from the second terminal may not carry current geographical position information of the second terminal. After receiving the SRS resource request from the second terminal, the network device first determines a current geographical position of the second terminal, and then configures a first resource for the second terminal based on the current geographical position.

The second terminal may obtain the current geographical position of the second terminal by using the following method: The network device sends a second reference signal to the second terminal; and after receiving the second reference signal, the second terminal obtains a second RSRP corresponding to the second reference signal, and obtains the geographical position information of the second terminal based on the second RSRP. The second RSRP indicates a receive power of the second reference signal arriving at the second terminal. Alternatively, after receiving the second reference signal, the second terminal obtains a second RSRQ corresponding to the second reference signal, and obtains the geographical position information of the second terminal based on the second RSRQ. The second RSRQ indicates a signal quality of the second reference signal arriving at the second terminal.

The network device may obtain the current geographical position of the second terminal by using the following method: The network device sends a second reference signal to the second terminal; and after receiving the second reference signal, the second terminal obtains a second RSRP corresponding to the second reference signal, and sends the second RSRP to the network device. In this way, the network device obtains the geographical position information of the second terminal based on the received second RSRP. Alternatively, after receiving the second reference signal, the second terminal obtains a second RSRQ corresponding to the second reference signal, and sends the RSRQ to the network device. In this way, the network device obtains the geographical position information of the second terminal based on the received second RSRQ.

Certainly, the second terminal or the network device may alternatively determine the current geographical position of the second terminal in another manner. This is not limited in this application.

S502: The second terminal sends the first SRS by using the first resource.

Correspondingly, the first terminal receives the first SRS from the second terminal.

Optionally, the first terminal may alternatively send fourth capability information (which may also be referred to as a measurement precision capability) to the network device. The fourth capability information indicates a precision requirement on a measurement result. That the precision requirement is high means that it is specified that a measurement result, obtained by the first terminal, of the first SRS is within a preset offset range; that the precision requirement is low means that the measurement result, obtained by the first terminal, of the first SRS may not be within the preset offset range. It is easy to understand that if the precision requirement is high, the network device performs configuration based on the fourth capability information. For example, the network device indicates the first terminal to: perform the following S503 and a subsequent procedure, to adjust receiving timing (timing), and receive the first SRS on a correct occasion, to ensure that the measurement result of the first SRS is more accurate. If the precision requirement is low, the first terminal may not perform the following step of adjusting receiving timing.

Certainly, the first terminal may alternatively determine, based on the precision requirement on the measurement result, whether to perform the following S503 and the subsequent procedure.

S503: The first terminal determines a timing offset based on the first resource.

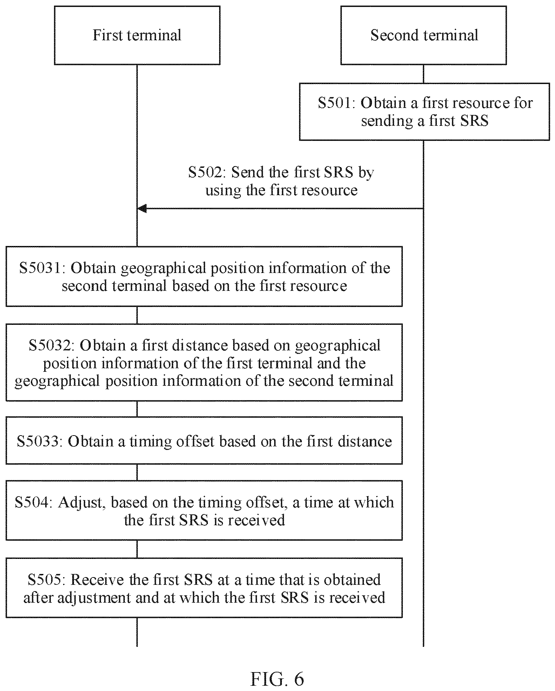

In a possible implementation, referring to FIG. 6, S503 may be specifically implemented as the following steps.

S5031: The first terminal obtains the geographical position information of the second terminal based on the first resource.

It is mentioned above that there is the correspondence between a first resource and geographical position information. Based on the correspondence, the first terminal may determine the geographical position information of the second terminal based on the first resource for sending the first SRS. The correspondence may be preconfigured in the first terminal. For example, the correspondence may be {geographical position information 1-resource 1; geographical position information 2-resource 2; ...; geographical position information Q-resource Q}. Certainly, the correspondence may be stored in another device other than the network device (for example, a base station). When the first terminal needs to query the correspondence, the first terminal obtains the correspondence from the device storing the correspondence. A specific implementation in which the first terminal obtains the geographical position information of the second terminal is not limited in this embodiment of this application. For example, the first terminal obtains, through monitoring, the first SRS from the second terminal, where the first SRS is sent on the sixth symbol in a slot. In this case, the first terminal may determine the geographical position of the second terminal based on the correspondence.

S5032: The first terminal obtains a first distance based on geographical position information of the first terminal and the geographical position information of the second terminal, where the first distance is a distance between the first terminal and the second terminal.

For a manner in which the first terminal obtains the geographical position information of the first terminal, refer to the manner in which the second terminal obtains the geographical position information of the second terminal. Details are not described herein again.

S5033: The first terminal obtains the timing offset based on the first distance.

Referring to FIG. 4, an example in which the first terminal is UE 1 and the second terminal is UE 2 is used, and a distance between the UE 1 and the UE 2 is d. In this case, the timing offset may be calculated by using the following formula: t=d/c, where t is the timing offset, c is a propagation speed of a radio signal, and / is a division operator.

S504: Adjust, based on the timing offset, a time at which the first SRS is received.

In other words, when a receiving occasion is adjusted, impact of the first distance between the first terminal and the second terminal can be considered. Optionally, referring to FIG. 4, the UE 2 sends the first SRS d2/c earlier than a reference time, and the UE 1 detects the first SRS (d1-d)/c later than the reference time. A difference between a sending occasion of the UE 2 and a detection (receiving) occasion of the UE 1 is (d2+d1-d)/c.

Certainly, the UE 2 may alternatively send the first SRS on another occasion. In this case, provided that the difference between the receiving occasion of the UE 1 and the sending occasion of the UE 2 is (d2+d1-d)/c, it can be ensured that signal strength, measured by the UE 1, of the first SRS is close to a signal peak of the first SRS, and therefore, accuracy of the measurement result is improved.

S505: Receive the first SRS at a time that is obtained after adjustment and at which the first SRS is received.

According to the communication method provided in this embodiment of this application, the first terminal determines a timing offset based on a first resource for sending a first SRS of a specific second terminal, and adjusts, based on the timing offset, a time at which the first SRS is received. In this way, the first terminal receives the first SRS at a time obtained after adjustment. Because the first SRS can be received at a relatively accurate time, measured signal strength of the first SRS may be closer to a signal peak of the first SRS, so that a measurement result specific to the first SRS is more accurate.

It should be noted that a name of a message or information, a name of a parameter in a message, or the like mentioned in the embodiments of this application is merely an example, and may be another name in practice.

It should be noted that "preconfigured/preset" and the like mentioned in the embodiments of this application may be configured through the OAM, or configured by the network device, or configured in the terminal.

It may be understood that, to implement the foregoing functions, network elements in the embodiments of this application include corresponding hardware structures and/or software modules for performing the functions. With reference to units and algorithm steps of each example described in the embodiments disclosed in this application, the embodiments of this application may be implemented in a form of hardware or a combination of hardware and computer software. Whether a function is performed by hardware or hardware driven by computer software depends on particular applications and design constraints of the technical solutions. A person skilled in the art may use different methods for each particular application to implement the described functions, but it should not be construed that the implementation goes beyond the scope of the technical solutions of the embodiments of this application.

In the embodiments of this application, the network elements may be divided into function units based on the foregoing method examples. For example, each function unit may be obtained through division based on a corresponding function, or two or more functions may be integrated into one processing unit. The integrated unit may be implemented in a form of hardware, or may be implemented in a form of a software function unit. It should be noted that in the embodiments of this application, the unit division is an example, is merely logical function division, and may be other division in actual implementation.

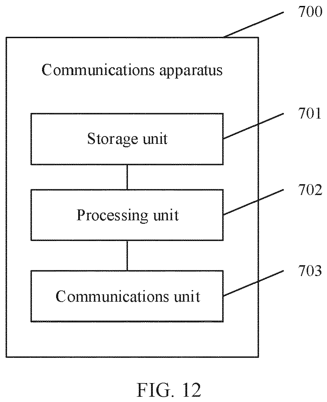

FIG. 12 is a schematic block diagram of a communications apparatus according to an embodiment of this application. The communications apparatus may be the first terminal, the second terminal, or the network device. The communications apparatus 700 may exist in a form of software, or may be a chip that can be used in a device. The communications apparatus 700 includes a processing unit 702 and a communications unit 703. Optionally, the communications unit 703 may be further divided into a sending unit (not shown in FIG. 12) and a receiving unit (not shown in FIG. 12). The sending unit is configured to support the communications apparatus 700 in sending information to another network element. The receiving unit is configured to support the communications apparatus 700 in receiving information from the another network element.

Optionally, the communications apparatus 700 may further include a storage unit 701, configured to store program code and data of the communications apparatus 700, where the data may include but is not limited to original data, intermediate data, or the like.

If the communications apparatus 700 is the first terminal mentioned above, the processing unit 702 may be configured to support the first terminal in performing S302 in FIG. 3, S5031 in FIG. 6, and/or another process used for the solutions described in this specification. The communications unit 703 is configured to support communication between the first terminal and another network element (for example, the network device), for example, support the first terminal in performing S301 and S304 in FIG. 3 and S502 in FIG. 6. Optionally, when the communications unit is divided into the sending unit and the receiving unit, the sending unit is configured to support the first terminal in sending information to the another network element. For example, the sending unit is configured to support the first terminal in performing S304 in FIG. 3, and/or another process used for the solutions described in this specification. The receiving unit is configured to support the first terminal in receiving information from the another network element. For example, the receiving unit is configured to support the first terminal in performing S301 in FIG. 3, and/or another process used for the solutions described in this specification.

If the communications apparatus 700 is the second terminal mentioned above, the processing unit 702 may be configured to support the second terminal in performing S501 in FIG. 5, and/or another process used for the solutions described in this specification. The communications unit 703 is configured to support communication between the second terminal and another network element (for example, the network device), for example, support the second terminal in performing S301 in FIG. 3. Optionally, when the communications unit is divided into the sending unit and the receiving unit, the sending unit is configured to support the second terminal in sending information to the another network element. For example, the sending unit is configured to support the second terminal in performing S301 in FIG. 3, and/or another process used for the solutions described in this specification. The receiving unit is configured to support the second terminal in receiving information from the another network element, and/or another process used for the solutions described in this specification.

If the communications apparatus 700 is the network device, the processing unit 702 may be configured to support the network device in determining a first resource, and/or another process used for the solutions described in this specification. The communications unit 703 is configured to support communication between the network device and another network element (for example, the first terminal), for example, support the network device in performing S304 in FIG. 3. Optionally, the communications unit may be divided into a sending unit and a receiving unit with reference to the foregoing descriptions.

In a possible manner, the processing unit 702 may be a controller, or the processor 201 or the processor 207 shown in FIG. 2. For example, the processing unit 702 may be a central processing unit (Central Processing Unit, CPU), a general-purpose processor, a digital signal processor (Digital Signal Processing, DSP), an application-specific integrated circuit (Application Specific Integrated Circuit, ASIC), a field programmable gate array (Field-Programmable Gate Array, FPGA), another programmable logic device, a transistor logic device, a hardware component, or any combination thereof. The processing unit 702 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications unit 703 may be the transceiver 204 shown in FIG. 2, or may be a transceiver circuit or the like. The storage unit 701 may be the memory 203 shown in FIG. 2.

A person of ordinary skill in the art may understand that all or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or the functions according to the embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid State Disk, SSD)), or the like.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical or other forms.

The units described as separate parts may or may not be physically separate, and parts displayed as units may or may not be physical units, may be located at one position, or may be distributed on a plurality of network devices (for example, terminal devices). Some or all of the units may be selected based on an actual requirement, to achieve the objectives of the solutions of the embodiments.

In addition, function units in the embodiments of this application may be integrated into one processing unit, or each of the function units may exist alone, or two or more units are integrated into one unit. The integrated unit may be implemented in a form of hardware, or may be implemented in a form of hardware in addition to a software function unit.

Based on the foregoing descriptions of the implementations, a person skilled in the art may clearly understand that this application may be implemented by software in addition to necessary universal hardware or certainly, by hardware only. In most cases, the former is a preferred implementation. Based on such an understanding, the technical solutions of this application essentially, or the part contributing to the current technology may be implemented in a form of a software product. The computer software product is stored in a readable storage medium, such as a floppy disk, a hard disk, or an optical disc of a computer, and includes several instructions for instructing a computer device (which may be a personal computer, a server, a network device, or the like) to perform the methods described in the embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1.   A communication method, comprising:

receiving, by a first terminal, at least one first sounding reference signal SRS from at least one second terminal, wherein the first SRS is used to measure cross-link interference CLI, and the first SRS occupies a first resource;
obtaining, by the first terminal based on the at least one first SRS, information about a measurement result of the at least one second terminal, wherein the measurement result indicates signal strength of the first SRS from the second terminal; and
sending, by the first terminal, information about one or more measurement results to a network device.

2.   The communication method according to claim 1, wherein the information about the one or more measurement results comprises indication information of the one or more measurement results and/or second indication information, and the second indication information comprises resource indication information of the first SRS.

3.   The communication method according to claim 2, wherein the resource indication information of the first SRS is a resource identifier of the first SRS.

4.   The communication method according to any one of claims 1 to 3, wherein the method further comprises:

obtaining, by the first terminal, first indication information, wherein the first indication information indicates the first terminal to send information about N largest measurement results in the measurement result of the at least one second terminal, or information about N smallest measurement results in the measurement result of the at least one second terminal, and N is an integer greater than or equal to 1; and
the sending, by the first terminal, information about one or more measurement results to a network device comprises:
sending, by the first terminal based on the first indication information, the information about the N measurement results to the network device.

5.   The communication method according to any one of claims 1 to 3, wherein the method further comprises:

obtaining, by the first terminal, first indication information, wherein the first indication information indicates the first terminal to send information about J measurement results that are in the measurement result of the at least one second terminal and that are greater than or equal to a first threshold, and J is a positive integer; and
the sending, by the first terminal, information about one or more measurement results to a network device comprises:
sending, by the first terminal based on the first indication information, the information about the J measurement results that are in the measurement result of the at least one second terminal and that are greater than or equal to the first threshold to the network device.

6.   The communication method according to any one of claims 1 to 3, wherein the method further comprises:

obtaining, by the first terminal, first indication information, wherein the first indication information indicates the first terminal to send information about W measurement results that are in the measurement result of the at least one second terminal and that are less than or equal to a second threshold, and W is a positive integer; and
the sending, by the first terminal, information about one or more measurement results to a network device comprises:
sending, by the first terminal based on the first indication information, the information about the W measurement results that are in the measurement result of the at least one second terminal and that are less than or equal to the second threshold to the network device.

7.   The communication method according to any one of claims 1 to 6, wherein the sending, by the first terminal, information about one or more measurement results to a network device comprises:

> sending, by the first terminal, information about a first measurement result to the network device at a first time; and
> sending, by the first terminal, information about a second measurement result to the network device at a second time, wherein an interval between the first time and the second time is a preset time period, and a difference between the second measurement result and the first measurement result is greater than or equal to a preset difference.

8. The communication method according to any one of claims 1 to 7, wherein the method further comprises: obtaining, by the first terminal, configuration information, wherein the configuration information indicates at least one of the following:

> a sequence, a sequence set, or the resource indication information of the first SRS, and the sequence set comprises at least one sequence; or
> reporting the second indication information of the first SRS.

9. The communication method according to any one of claims 1 to 8, wherein the method further comprises: sending, by the first terminal, first capability information to the network device, wherein the first capability information indicates capability information of CLI measurement, and the first capability information comprises at least one of the following: a quantity of first SRSs that can be monitored by the first terminal in a time unit, whether the first terminal can monitor consecutive symbols, a maximum quantity of symbols that can be monitored by the first terminal in a time unit, or a maximum quantity of consecutive symbols that can be monitored by the first terminal in a time unit.

10. The communication method according to any one of claims 1 to 9, wherein the method further comprises: sending, by the first terminal, third capability information to the network device, wherein the third capability information indicates a multiplexing relationship between a second resource and the first resource for receiving the first SRS, the multiplexing relationship comprises at least one of time division multiplexing or frequency division multiplexing, and the second resource is a resource used for a data transmission.

11. The communication method according to claim 10, wherein the data transmission comprises at least one of the following: a physical downlink shared channel PDSCH, a physical downlink control channel PDCCH, or a channel state information reference signal CSI-RS.

12. The communication method according to claim 10 or 11, wherein the receiving, by a first terminal, at least one first SRS from at least one second terminal comprises:
when the third capability information indicates that frequency division multiplexing between the second resource and the first resource is not supported and the first resource and the second resource have a part of same time domain resource, receiving, by the first terminal on the same time domain resource, the at least one first SRS from the at least one second terminal.

13. The communication method according to claim 10 or 11, wherein
when the third capability information indicates that frequency division multiplexing between the second resource and the first resource is not supported, the first resource and the second resource do not overlap in time domain.

14. The communication method according to any one of claims 1 to 11, wherein the receiving, by a first terminal, at least one first sounding reference signal SRS from at least one second terminal comprises:
when the first resource and a resource used for an uplink transmission have a part of same resource, receiving, by the first terminal on the same resource, the at least one first SRS from the at least one second terminal.

15. The communication method according to any one of claims 1 to 11, wherein the first resource and a resource used for an uplink transmission do not overlap in time domain.

16. The communication method according to any one of claims 1 to 15, wherein the obtaining, by the first terminal based on the at least one first SRS, information about a measurement result of the at least one second terminal comprises:

> measuring, by the first terminal, the signal strength of the first SRS; and
> performing, by the first terminal, layer 3 filtering on the signal strength of the first SRS, to obtain a layer 3 measurement result, wherein a parameter used for the layer 3 filtering is configured by the network device.

17. The communication method according to any one of claims 1 to 16, wherein the method further comprises:

receiving, by the first terminal, a third threshold configured by the network device; and

the sending, by the first terminal, information about one or more measurement results to a network device comprises:

sending, by the first terminal to the network device, a measurement result greater than or equal to the third threshold.

18. A communication method, comprising:

receiving, by a network device, information about one or more measurement results from a first terminal, wherein the information about the one or more measurement results comprises indication information of the one or more measurement results and/or second indication information, and the second indication information comprises resource indication information of a first SRS, wherein

the measurement result indicates signal strength of the first SRS from a second terminal, and the first SRS occupies a first resource.

19. The communication method according to claim 18, wherein the resource indication information of the first SRS is a resource identifier of the first SRS.

20. The communication method according to claim 18 or 19, wherein the method further comprises:

sending, by the network device, first indication information to the first terminal, wherein the first indication information indicates the first terminal to send information about N largest measurement results in a measurement result of at least one second terminal, or information about N smallest measurement results in a measurement result of at least one second terminal, and N is an integer greater than or equal to 1; and the receiving, by a network device, information about one or more measurement results from a first terminal comprises:

receiving, by the network device, the information about the N measurement results from the first terminal.

21. The communication method according to claim 18 or 19, wherein the method further comprises:

sending, by the network device, first indication information to the first terminal, wherein the first indication information indicates the first terminal to send information about J measurement results that are in a measurement result of at least one second terminal and that are greater than or equal to a first threshold, and J is a positive integer; and

the receiving, by a network device, information about one or more measurement results from a first terminal comprises:

receiving, by the network device from the first terminal, the information about the J measurement results that are in the measurement result of the at least one second terminal and that are greater than or equal to the first threshold.

22. The communication method according to claim 18 or 19, wherein the method further comprises:

sending, by the network device, first indication information to the first terminal, wherein the first indication information indicates the first terminal to send information about W measurement results that are in a measurement result of at least one second terminal and that are less than or equal to a second threshold, and W is a positive integer; and

the receiving, by a network device, information about one or more measurement results from a first terminal comprises:

receiving, by the network device from the first terminal, the information about the W measurement results that are in the measurement result of the at least one second terminal and that are less than or equal to the second threshold.

23. The communication method according to any one of claims 18 to 22, wherein the receiving, by a network device, information about one or more measurement results from a first terminal comprises:

receiving, by the network device, information about a first measurement result from the first terminal at a first time; and

receiving, by the network device, information about a second measurement result from the first terminal at a second time, wherein an interval between the first time and the second time is a preset time period, and a difference between the second measurement result and the first measurement result is greater than or equal to a preset difference.

24. The communication method according to any one of claims 18 to 22, wherein the method further comprises:

sending, by the network device, configuration information to the first terminal, wherein the configuration information indicates at least one of the following:

a sequence or a sequence set of the first SRS, and the sequence set comprises at least one sequence; and

reporting the second indication information of the first SRS, wherein the second indication information of the first SRS comprises one or more of the resource indication information of the first SRS or the sequence of the first SRS.

25. The communication method according to any one of claims 18 to 24, wherein the method further comprises:
   receiving, by the network device, first capability information from the first terminal, wherein the first capability information indicates capability information of CLI measurement, and the first capability information comprises at least one of the following: a quantity of first SRSs that can be monitored by the first terminal in a time unit, whether the first terminal can monitor consecutive symbols, a maximum quantity of symbols that can be monitored by the first terminal in a time unit, or a maximum quantity of consecutive symbols that can be monitored by the first terminal in a time unit.

26. The communication method according to any one of claims 18 to 25, wherein the method further comprises:
   receiving, by the network device, third capability information from the first terminal, wherein the third capability information indicates a multiplexing relationship between a second resource and the first resource for receiving the first SRS, the multiplexing relationship comprises at least one of time division multiplexing or frequency division multiplexing, and the second resource is a resource used for a data transmission.

27. The communication method according to claim 26, wherein the data transmission comprises at least one of the following: a physical downlink shared channel PDSCH, a physical downlink control channel PDCCH, or a channel state information reference signal CSI-RS.

28. The communication method according to claim 26 or 27, wherein the method further comprises:
   when the third capability information indicates that frequency division multiplexing between the second resource and the first resource is not supported, configuring, by the network device, that the first resource and the second resource do not overlap in time domain.

29. The communication method according to any one of claims 18 to 28, wherein the method further comprises:
   configuring, by the network device, that the first resource and a resource used for an uplink transmission do not overlap in time domain.

30. The communication method according to any one of claims 18 to 29, wherein the method further comprises:
   es:
   configuring, by the network device for the first terminal, a parameter used for layer 3 filtering; and
   the receiving, by a network device, information about one or more measurement results from a first terminal comprises:
   receiving, by the network device, a layer 3 measurement result from the first terminal, wherein the layer 3 measurement result is indication information of the measurement result, and is obtained based on the parameter used for the layer 3 filtering.

31. The communication method according to any one of claims 18 to 30, wherein the method further comprises:
   configuring, by the network device, a third threshold for the first terminal; and
   the receiving, by a network device, information about one or more measurement results from a first terminal comprises:
   receiving, by the network device from the first terminal, a measurement result greater than or equal to the third threshold.

32. A communication method, comprising:

   obtaining, by a first terminal, configuration information from a network device, wherein the configuration information indicates reference information used to measure a received signal strength indicator RSSI of cross-link interference CLI; the reference information used to measure the RSSI of the CLI comprises at least one of the following: a reference subcarrier spacing, a quantity of symbols used to measure the RSSI, a start orthogonal frequency division multiplexing OFDM symbol used to measure the RSSI, a quantity of physical resource blocks PRBs used to measure the RSSI, or a start PRB used to measure the RSSI; the start OFDM symbol used to measure the RSSI and/or the quantity of symbols used to measure the RSSI meet/meets a requirement of an integer quantity of symbols obtained based on a relationship between a subcarrier spacing in an active bandwidth part BWP and the reference subcarrier spacing; and the start PRB used to measure the RSSI and/or the quantity of PRBs used to measure the RSSI meet/meets a requirement of an integer quantity of PRBs obtained based on the relationship between the subcarrier spacing in the active BWP and the reference subcarrier spacing;
   obtaining, by the first terminal based on the configuration information, information about one or more measurement results; and
   sending, by the first terminal, the information about the one or more measurement results to the network device, wherein

the measurement result is a measurement result used to measure the RSSI of the CLI.

33. The communication method according to claim 32, wherein the information about the one or more measurement results comprises indication information of the one or more measurement results and/or second indication information, and the second indication information comprises resource indication information.

34. The communication method according to claim 33, wherein the resource indication information is an identifier of a resource used to measure the RSSI.

35. The communication method according to any one of claims 32 to 34, wherein the method further comprises:

obtaining, by the first terminal, first indication information, wherein the first indication information indicates the first terminal to send information about N largest measurement results in the one or more measurement results of the RSSI, or information about N smallest measurement results in the one or more measurement results of the RSSI, and N is an integer greater than or equal to 1; and

the sending, by the first terminal, the information about the one or more measurement results to the network device comprises:

sending, by the first terminal based on the first indication information, the information about the N measurement results to the network device.

36. The communication method according to any one of claims 32 to 34, wherein the method further comprises:

receiving, by the first terminal, a third threshold configured by the network device; and

the sending, by the first terminal, the information about the one or more measurement results to the network device comprises:

sending, by the first terminal to the network device, a measurement result greater than or equal to the third threshold.

37. The communication method according to any one of claims 32 to 36, wherein

when the subcarrier spacing in the active BWP is less than the reference subcarrier spacing used for RSSI measurement, the quantity of symbols used to measure the RSSI is a multiple of a value obtained by dividing the reference subcarrier spacing used for the RSSI measurement by the subcarrier spacing in the active BWP.

38. A communication method, comprising:

sending, by a network device, configuration information to a first terminal, wherein the configuration information indicates reference information used to measure a received signal strength indicator RSSI of cross-link interference CLI; the reference information used to measure the RSSI of the CLI comprises at least one of the following: a reference subcarrier spacing, a quantity of symbols used to measure the RSSI, a start orthogonal frequency division multiplexing OFDM symbol used to measure the RSSI, a quantity of physical resource blocks PRBs used to measure the RSSI, or a start PRB used to measure the RSSI; the start OFDM symbol used to measure the RSSI and/or the quantity of symbols used to measure the RSSI meet/meets a requirement of an integer quantity of symbols obtained based on a relationship between a subcarrier spacing in an active bandwidth part BWP and the reference subcarrier spacing; and the start PRB used to measure the RSSI and/or the quantity of PRBs used to measure the RSSI meet/meets a requirement of an integer quantity of PRBs obtained based on the relationship between the subcarrier spacing in the active BWP and the reference subcarrier spacing; and

receiving, by the network device, information about one or more measurement results from the first terminal, wherein

the measurement result is a measurement result used to measure the RSSI of the CLI.

39. The communication method according to claim 38, wherein the information about the one or more measurement results comprises indication information of the one or more measurement results and/or second indication information, and the second indication information comprises resource indication information.

40. The communication method according to claim 39, wherein the resource indication information comprises an identifier of a resource used to measure the RSSI.

41. The communication method according to any one of claims 38 to 40, wherein the method further comprises:

sending, by the network device, first indication information to the first terminal, wherein the first indication information indicates the first terminal to send information about N largest measurement results in the one or more measurement results of the RSSI, or information about N smallest measurement results in the one or more measurement results of the RSSI, and N is an integer greater than or equal to 1; and
the receiving, by the network device, information about one or more measurement results from the first terminal comprises:
receiving, by the network device, information about the N measurement results from the first terminal.

42. The communication method according to any one of claims 38 to 40, wherein the method further comprises:

configuring, by the network device, a third threshold for the first terminal; and
the receiving, by the network device, information about one or more measurement results from the first terminal comprises:
receiving, by the network device from the first terminal, a measurement result greater than or equal to the third threshold.

43. The communication method according to any one of claims 38 to 42, wherein
when the subcarrier spacing in the active BWP is less than the reference subcarrier spacing used for RSSI measurement, the quantity of symbols used to measure the RSSI is a multiple of a value obtained by dividing the reference subcarrier spacing used for the RSSI measurement by the subcarrier spacing in the active BWP

44. A communications apparatus, comprising a processor, a memory, a bus, and a transceiver, wherein the memory is configured to store a computer-executable instruction, the processor and the memory are connected through the bus, and when the apparatus runs, the processor executes the computer-executable instruction stored in the memory, so that the apparatus is enabled to perform the communication method according to any one of claims 1 to 17, or the apparatus is enabled to perform the communication method according to any one of claims 18 to 31, or the apparatus is enabled to perform the communication method according to any one of claims 32 to 37, or the apparatus is enabled to perform the communication method according to any one of claims 38 to 43.

45. A communications apparatus, wherein the apparatus is configured to perform the communication method according to any one of claims 1 to 17, or the apparatus is configured to perform the communication method according to any one of claims 18 to 31, or the apparatus is configured to perform the communication method according to any one of claims 32 to 37, or the apparatus is configured to perform the communication method according to any one of claims 38 to 43.

46. A readable storage medium, wherein the readable storage medium comprises a program or an instruction; and when the program or the instruction is executed, the communication method according to any one of claims 1 to 17 is implemented, or the communication method according to any one of claims 18 to 31 is implemented, or the communication method according to any one of claims 32 to 37 is implemented, or the communication method according to any one of claims 38 to 43 is implemented.

47. A communications system, wherein the system comprises the first terminal according to any one of claims 1 to 17 and the network device according to any one of claims 18 to 31, or the system comprises the first terminal according to any one of claims 32 to 37 and the network device according to any one of claims 38 to 43.

Base station 1

Base station 2

d1

UE 3

d31

d2

d21

UE 2

UE 1

FIG. 1a

Base station

Backhaul link

Access point

Access link

UE

FIG. 1b

FIG. 2

FIG. 3

FIG. 4

```
┌─────────────────┐          ┌─────────────────┐
│  First terminal │          │ Second terminal │
└────────┬────────┘          └────────┬────────┘
         │                            │
         │                   ┌────────┴───────────────────┐
         │                   │ S501: Obtain a first resource for │
         │                   │    sending a first SRS     │
         │                   └────────┬───────────────────┘
         │                            │
         │    S502: Send the first SRS by          │
         │       using the first resource          │
         │◄───────────────────────────┤
         │                            │
┌────────┴────────────────────┐       │
│ S503: Determine a timing offset │    │
│    based on the first resource  │    │
└────────┬────────────────────┘       │
         │                            │
┌────────┴────────────────────┐       │
│ S504: Adjust, based on the timing │  │
│  offset, a time at which the first│  │
│        SRS is received         │    │
└────────┬────────────────────┘       │
         │                            │
┌────────┴────────────────────┐       │
│ S505: Receive the first SRS at a │   │
│   time that is obtained after    │   │
│ adjustment and at which the first│   │
│        SRS is received         │     │
└────────┬────────────────────┘       │
         │                            │
```

FIG. 5

41

| First terminal | | Second terminal |
|---|---|---|

S501: Obtain a first resource for sending a first SRS

S502: Send the first SRS by using the first resource

S5031: Obtain geographical position information of the second terminal based on the first resource

S5032: Obtain a first distance based on geographical position information of the first terminal and the geographical position information of the second terminal

S5033: Obtain a timing offset based on the first distance

S504: Adjust, based on the timing offset, a time at which the first SRS is received

S505: Receive the first SRS at a time that is obtained after adjustment and at which the first SRS is received

FIG. 6

| First terminal | Second terminal | Second terminal | Network device |
|---|---|---|---|

S301: First SRS

S301: First SRS

S302: Obtain, based on at least one first SRS, information about a measurement result of at least one second terminal

S3031: Obtain first indication information

S3031: First indication information

S3041: Information about N measurement results

FIG. 7

FIG. 8

| First<br>terminal | Second<br>terminal | Second<br>terminal | Network device |
|---|---|---|---|

S301: First SRS

S301: First SRS

S302: Obtain, based on at
least one first SRS,
information about a
measurement result of at
least one second terminal

S3033: Obtain first
indication information

S3033: First
indication information

S3043: Information
about W
measurement results

FIG. 9

FIG. 10

| First terminal | Second terminal | Second terminal | Network device |
|---|---|---|---|

S1101: First capability information

S1102: Second capability information

S1103: Third capability information

S1104: Configuration information

S1105: Configure a first SRS of the second terminal

FIG. 11

700

Communications apparatus

| Storage unit | 701

| Processing unit | 702

| Communications unit | 703

FIG. 12

## INTERNATIONAL SEARCH REPORT

| International application No. |
|---|
| **PCT/CN2020/082111** |

| A. | CLASSIFICATION OF SUBJECT MATTER |
|---|---|
| | H04W 24/02(2009.01)i |

According to International Patent Classification (IPC) or to both national classification and IPC

| B. | FIELDS SEARCHED |
|---|---|

Minimum documentation searched (classification system followed by classification symbols)

H04W H04Q H04L

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE, 3GPP: 参考信号, 交叉链路干扰, 动态时分双工, 灵活双工, 异向链路干扰, 资源, 信号强度, 指示, 门限, 配置, 能力, 物理下行共享信道, 物理下行控制信道; SRS, CLI, dynamic, flexible, mitigation, resource, RSRP, RSSI, measurement, configuration, PDSCH, PDCCH, CSI-RS

| C. | DOCUMENTS CONSIDERED TO BE RELEVANT |
|---|---|

| Category* | Citation of document, with indication, where appropriate, of the relevant passages | Relevant to claim No. |
|---|---|---|
| X | ZTE. "UE-to-UE measurement as an enabler for CLI mitigation schemes" *3GPP TSG RAN WG1 Meeting NR#3, R1-1715563*, 11 September 2017 (2017-09-11), page 3, section 3 to page 6, section 4 | 1-47 |
| X | CN 109391995 A (HUAWEI TECHNOLOGIES CO., LTD.) 26 February 2019 (2019-02-26) description paragraphs [0116]-[0140], figure 3 | 1-47 |
| A | WO 2019029464 A1 (HUAWEI TECHNOLOGIES CO., LTD.) 14 February 2019 (2019-02-14) entire document | 1-47 |
| A | WO 2018219068 A1 (ZTE CORPORATION) 06 December 2018 (2018-12-06) entire document | 1-47 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 June 2020** | **02 July 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/082111**

| Patent document cited in search report | | | Publication date (day/month/year) | Patent family member(s) | | | Publication date (day/month/year) |
|---|---|---|---|---|---|---|---|
| CN | 109391995 | A | 26 February 2019 | None | | | |
| WO | 2019029464 | A1 | 14 February 2019 | None | | | |
| WO | 2018219068 | A1 | 06 December 2018 | CN | 108933648 | A | 04 December 2018 |

Form PCT/ISA/210 (patent family annex) (January 2015)

**REFERENCES CITED IN THE DESCRIPTION**

**Patent documents cited in the description**

- CN 201910254174